(19) Europäisches Patentamt
European Patent Office
Office européen des brevets

(11) **EP 3 760 858 B1**

(12) **EUROPEAN PATENT SPECIFICATION**

(45) Date of publication and mention
of the grant of the patent:
**06.07.2022 Bulletin 2022/27**

(21) Application number: **20183873.7**

(22) Date of filing: **03.07.2020**

(51) International Patent Classification (IPC):
**F03D 3/02** *(2006.01)* **F03D 7/06** *(2006.01)*
**F03D 3/06** *(2006.01)*

(52) Cooperative Patent Classification (CPC):
**F03D 3/02; F03D 7/06;** F03D 3/061;
F05B 2240/212; F05B 2240/213; F05B 2250/25;
F05B 2260/507; F05B 2260/85; F05B 2270/327;
Y02E 10/74

(54) **WIND MICROTURBINE WITH AXIAL DEVELOPMENT**

WINDMIKROTURBINE MIT AXIALER ENTWICKLUNG

MICROTURBINE ÉOLIENNE À DÉVELOPPEMENT AXIAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2019 IT 201900011064**

(43) Date of publication of application:
**06.01.2021 Bulletin 2021/01**

(73) Proprietor: **WPE Research & Development S.r.l.
35134 Padova (IT)**

(72) Inventors:
• **RAGAZZO BAUD, Willy
825300 Macin jud Tulcea (RO)**
• **CHIGGIATO, Massimo
35012 Rustega di Camposiampiero (IT)**
• **RIZZOLO, Marco
35012 Camposampiero (IT)**
• **RIZZOLO, Valerio
35012 Camposampiero (IT)**

(74) Representative: **Contadin, Giorgio et al
Notarbartolo & Gervasi S.p.A.
Viale Achille Papa, 30
20149 Milano (IT)**

(56) References cited:
CN-A- 104 763 592    CN-U- 201 574 886
ES-U- 1 078 572      GB-A- 2 541 871
JP-A- 2007 040 239   KR-B1- 101 181 596

EP 3 760 858 B1

**Description**

The present invention refers to a wind microturbine (or wind generator) with axial development or with vertical axis, particularly adapted to urban contexts or environments, lending itself in any case to be installed even in groups in rural areas.

The technical concept underlying the wind microturbine with axial development (or even wind microturbine with vertical axis) of the invention consists - in a nutshell and for illustrative purposes only, without trivializing its relevance - of a hybrid constructive system between a wind turbine with vertical axis of the "resistance" type or "impact" type (also commonly known as Savonius turbine, used to convert into electricity the kinetic energy of the wind transmitted to a rotating shaft) and a wind turbine with vertical axis of the "load-bearing" type (also commonly known as-Darrieus turbine, used to generate electricity from the wind too).

In essence, therefore, the present invention is part of the field of wind microturbines (turbines capable of delivering an electric power between approximately 300 Watts and 4 kWatt, for residential, rural and artisan uses, also referred to as "home WT" or "community WT"), with non-invasive installations in the territory (compact device, both for the surface affected by the wind and for the weight, and low noise level, in order to allow the application thereof, for example on roofs or walls of houses, buildings, huts, floating platforms) and at variable, but rather low, heights from the surface or ground (starting from a minimum of 6-7 meters in height up to a maximum of a few tens of meters in height), in an urban housing context which, due to the morphology of the environment and height from the ground, is characterized by high turbulence and ascending currents and with a rather variable distribution of the prevailing winds, typically from 3 m/s to 9 m/s. The wind microturbines currently on the market have a common feature: they are sized on the basis of the average wind values of the site where they are to be installed.

The current normal practice involves collecting data by detecting them on site (very expensive solution) or from existing historical maps, to produce a histogram of the percentage duration of the different wind speeds: on the basis of these values, the sizing of the components of the microturbine are determined. However, this configuration of the microturbine is static, as it is based on average data, and the sizing thereof cannot efficiently cover all the variances (a function which, as known in statistics, provides a measure of the variability of the values taken by the variable itself; specifically, the measure of how much they quadratically differ from the arithmetic mean or from the expected value).

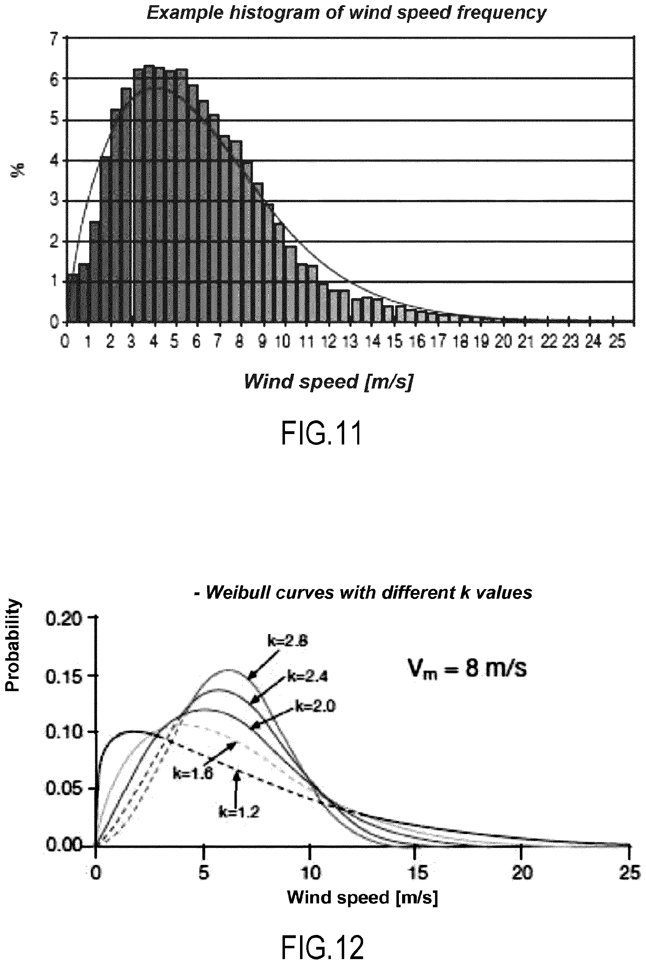

The temporal distribution of the wind speed for a site is usually described using the Weibull statistical distribution function which best approximates the distribution frequency of the average wind speeds, as shown in figure 11 attached: The Weibull distribution can be completely identified by two parameters, the scale factor A and the shape factor k.

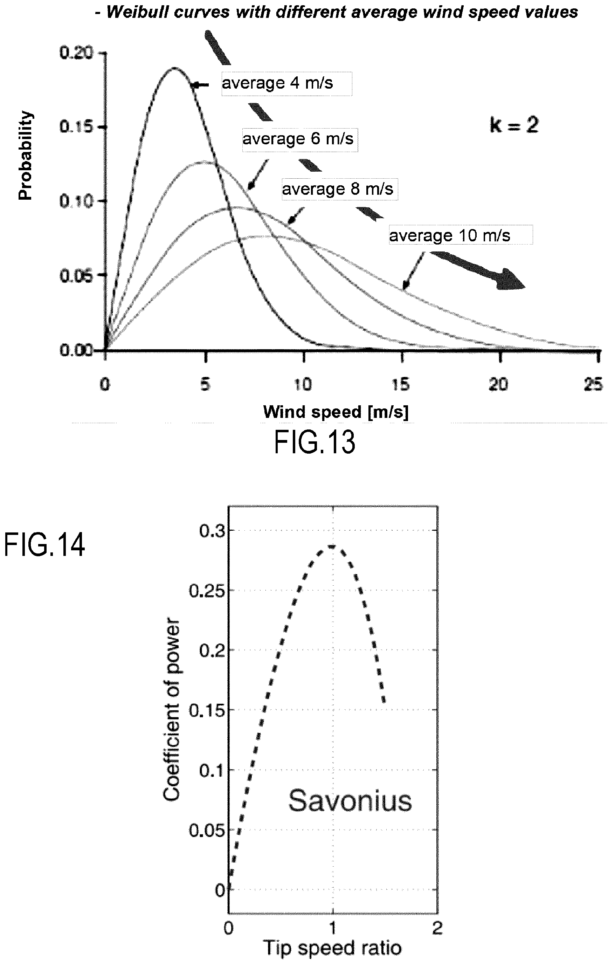

In particular, the scale factor A - expressed in m/s - is uniquely linked to the average wind speed, while the shape factor k - dimensionless - modifies the distribution symmetry: k values very close to 1 indicate very asymmetrical distributions, while high k values (greater than 2) create symmetrical and regular distributions, similar to Gaussians (see the two Cartesian graphs of figures 12 and 13 attached and the following table in the lower part of the following page).

*Table*

| Shape factor k | Ground morphology | Wind type |
|---|---|---|
| 1.2-1.7 | Mountain sites | Highly variable |
| 1.8-2.5 | Great plains - Hills | Variable |
| 2.5-3.0 | Open countryside | Fairly regular |
| 3.1-3.5 | Coastal areas | Regular |
| 3.5-4.0 | Islands | Very regular |

The shape factor k therefore physically represents the "dispersion" of the speed values around the average speed; in particular, the greater the k value, the less dispersion around the average value.

Much of the research in the field of wind microturbines has so far concentrated on improving the aerodynamic component of the generator: the blades of the microturbines currently on the market already reach very high performance levels (close to the physical limit defined by the Betz theorem).

Therefore, it is possible to assume that, in the face of a significant investment in the aerodynamic profile of a microturbine, the expected result could improve the power produced by only a few percentage points.

The current invention has therefore focused on a possible structural evolution of the process of transforming mechanical energy into electrical energy, introducing a programmable element on board the microturbine (such as an electronic controller) capable of dynamically optimizing the configuration of the electric generators with respect to the availability of mechanical energy produced by the wind turbine blades which, by definition, has a high variance over time (deriving in turn from a transformation of the kinetic energy of the wind).

This configuration allows to dynamically adapt the turbine to the scale factor "A" and to the shape factor "k" mentioned above.

As is also known, there are wind microturbines with vertical axis on the market of the so-called "hybrid" or "combined" type, in the sense that they simultaneously use, in the same constructional solution, Savonius microturbine blades and Darrieus microturbine blades; incidentally, this microturbine nomenclature involves a different geometry of the rotor axis and, therefore, a different shape of the blades existing between the two types of wind microturbines themselves.

The Savonius microturbine (referred to as "resistance" microturbine, as cited) can reach a rotation speed of 230-240 rpm and is therefore adapted to start with low-speed winds (for example, 4 m/s or 5 m/s), but on the other hand presents a loss of efficiency at higher wind speeds, as it has a low coefficient of power (CP).

On the contrary, the Darrieus microturbine (also called "load-bearing", as already mentioned) develops a greater power (approximately four times the Savonius microturbine) being able to reach a rotation speed of up to 600 rpm and being adapted to winds of stronger intensity (above 10 m/s), but, by definition, is not able to start autonomously (the starting torque therein is zero).

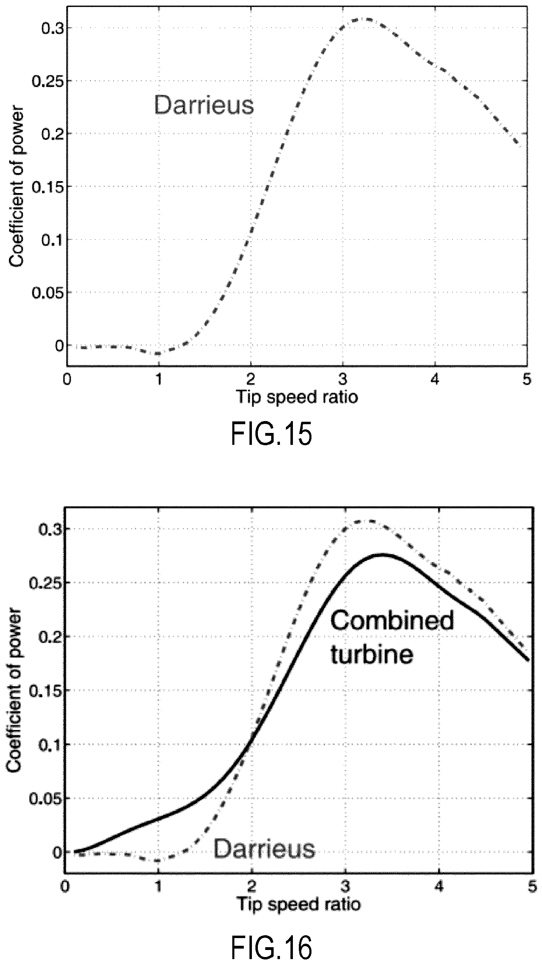

For their part, the hybrid microturbines currently available on the market - moreover, in an embryonic and almost theoretical state, considering their actual and indeed minimal diffusion - include a static configuration in which the two blade systems are fixed on the same axis coaxially to each other: in addition to produce a portion of electrical energy, the resistance microturbine is also used to start the load-bearing microturbine, arranged more externally, although in reality it disadvantageously becomes an aerodynamic brake in case of high wind speeds. In this regard, see the explanatory Cartesian graphs of figures 14, 15 and 16 attached, relating to the CP (Coefficient of Power) and TSR (Tip Speed Ratio, a parameter measuring the ratio between the tangential speed of the tip of a blade and the effective wind speed) of a Savonius microturbine, a Darrieus microturbine and a hybrid microturbine, from which the conversion curve allowing to switch from the kinetic energy of the wind to the mechanical energy stored by the blades of the microturbines, to then be transformed by the electric generators of the latter into electrical energy.

In particular, the CP parameter depends on the geometry of the blades and, in general, of the microturbine and on the inclination of the blades as well as on the wind speed.

It can clearly be observed how the presence of the two combined microturbines generates a lowering of performance compared to the more performing Darrieus microturbine, giving rise to what, for all purposes, is unanimously recognized as the main drawback (highlighted above) of the background art closest to the present invention.

A further drawback suffered by the known microturbines with vertical axis derives from the fact that their boasted and merely presumed operative effectiveness is not accompanied by any mathematical model or use algorithm explaining the dynamic behavior, nor by regulatory standards which measure the performance thereof, available instead for resistance (or Savonius) microturbines and load-bearing (or Darrieus) microturbines.

This is reflected in substantial mistrust from the market in the field, which does not attribute reliability of use thereto, which would in any case be desirable as hybrid microturbines seek to combine the advantages of resistance microturbines and load-bearing microturbines in a single solution.

A further drawback of the hybrid microturbines with axial development in the background art derives from the fact that the design and main operating principle thereof mainly if not essentially focus on the maximum power (or efficiency) which they are capable of producing at a given instant and in the presence of a given (generally higher, greater than 13 m/s) wind speed and not on the power which they are capable of producing in the unit of time (for example, a few hours of exposure over a year) during which, notoriously and inevitably, the wind speed is distributed in an irregular and variable manner: this determines a largely inefficient and non-optimal exploitation of the kinetic energy of the wind by the hybrid wind microturbines of known type or, in other words, a very low ability of the latter to capture the kinetic energy overall provided by the wind in a given time frame.

These drawbacks, in particular the main one described above, affect for example the hybrid wind microturbines with axial development presented in the background art documents published as JP2007040239 A and ES1078572 U, moreover equipped with a single electric generator: in these documents, the first inner blade of the Savonius microturbine stops producing mechanical energy when the second outer blade of the Darrieus microturbine begins to rotate about the vertical axis, thus starting to produce mechanical energy.

Therefore, starting from the awareness of the aforesaid drawbacks of the background art, the present invention aims at completely and effectively remedying them.

Specifically, it is main purpose of the invention to provide a wind microturbine (or wind generator) with axial development (or with vertical axis) of hybrid or combined design, as described above, which has improved performance with respect to that of the equivalent hybrid wind microturbines of known type and at least equal to that of the traditional load-bearing (or Darrieus) wind microturbines for the entire development of the CP/TSR conversion curve defined above.

In other words, it is main purpose of the invention to implement a hybrid-type wind microturbine with axial development in which the inner blades of a resistance (or Savonius) microturbine are not an obstacle or disturbance to the outer blades of a load-bearing (or Darrieus) microturbine, as occurs in the background art, but on the contrary, emphasize the advantages thereof by effectively and efficiently cooperating therewith in the production of electrical energy during operation.

In the cognitive sphere of such an object, it is task of the present invention to indicate a wind microturbine with axial development (or with vertical axis) which has improved performance with respect to that of load-bearing (or Darrieus) wind microturbines or resistance (or Savonius) wind microturbines of the background art.

It is another purpose of the present invention to create a wind microturbine with axial development (or with vertical axis) capable of exploiting the kinetic energy of the wind and transforming it into electrical energy provided to users more efficiently than the known hybrid wind microturbines of vertical development.

It is a last but not least purpose of the invention to obtain a wind microturbine with axial development (or with vertical axis) capable of widening the field of exploitation of the kinetic energy of wind with respect to what is allowed by the hybrid wind microturbines of vertical development of the current state of the art. Said purposes are achieved by a wind microturbine with axial development (or with vertical axis), particularly adapted to urban contexts, according to the appended claim 1, to which reference is made for simplicity of presentation. Further detailed constructional technical features of the wind microturbine with axial development of the invention, particularly adapted to urban or city contexts, are reported in the corresponding dependent claims.

The present invention also refers to an operating method of a hybrid wind microturbine with axial development (or, otherwise said, an electrical energy production method through a hybrid wind microturbine with axial development) according to the corresponding claim 20, to which reference is made for brevity. Other operative technical features of the operating method of a hybrid wind microturbine with axial development of the invention are contained in the respective dependent claims.

The aforesaid claims, hereinafter specifically and concretely defined, are intended as an integral part of the present description.

Advantageously, the wind microturbine with axial development (or with vertical axis) of the current invention is an adaptive and flexible wind generator which allows to exploit all the power provided by a hybrid blade wind turbine system, starting from low wind speeds to rise up to exploiting higher power peaks, not constraining the system to a fixed electric generator size.

This is due to the fact that the first inner blade and the second outer blade are coupled to each other by means of dynamic joining means, applied to the central shaft and cooperating with actuation means so as to make the rotation of the second outer blade independent from the rotation of the first inner blade while keeping both the inner blade and the outer blade operatively connected to the electric generator means when the second outer blade, under the action of the wind, reaches a predetermined angular speed, set according to the dimensions of the blades considered adequate for a given application.

Still advantageously, the wind microturbine with axial development (or with vertical axis) of the invention allows the so-called "cut-in", i.e., the speed at which the microturbine begins to produce mechanical energy, to be reduced, while allowing to get relevant mechanical torques for the production of energy, when the second series of wind turbine blades, preferably with a wing profile, comes into operation. In practice, the wind microturbine of the invention includes the presence of a first resistance blade, typical of a Savonius microturbine and preferably helical in shape, inside the constructional assembly, and of a second load-bearing blade, typical of a Darrieus microturbine and preferably with a wing profile of the NACA-0012 series or similar, more external in the constructional assembly: this is the standard configuration used in hybrid wind turbine systems, with the significant difference that, in the invention, the two blades are, under certain operative conditions connected to the wind, dynamically and operatively decoupled while being mounted on the same central shaft and while simultaneously contributing to the production of electrical energy even in such precise conditions.

The problem of independently managing the rotation of the two microturbines on the same axis, uncoupling the inner Savonius rotor from the outer Darrieus rotor when the wind speed exceeds a certain value but keeping both these rotors simultaneously active for the function for which they are used (i.e., the production of electrical energy), since in this case, the first microturbine would otherwise become an aerodynamic brake for the second, as previously explained, therefore decreasing the efficiency thereof, is solved in the invention by means of an appropriate implementation of dynamic joining means, preferably automatically managed by a central processing and control unit.

In particular, in the initial operating step, at a certain rpm, the rotor of the Savonius blade is coupled to the rotor of the Darrieus blade, for example by means of a progressive electromagnetic clutch (hence the term "dynamic" used for the joining means).

This type of coupling advantageously allows to transfer the mechanical energy from the inner blade (or Savonius, thus inaccurately definable, for simplification) in favor of the outer blade (or Darrieus, thus definable, again for simplification), energy required to overcome the initial inertia of the latter.

Once the Darrieus blade has started and reaches a certain rpm (predetermined threshold value for the angular speed of the second outer blade), the two rotors decouple again (i.e., the actuation means deactivate, for example, the electromagnetic clutch by placing it in the non-operative position), such that the Savonius blade does not act as an aerodynamic brake of the Darrieus blade, thus allowing to achieve the main object of the invention.

After the aforesaid mutual decoupling, the two microturbines therefore continue to function independently of each other, each according to the characteristic diagram thereof and each producing electrical energy and the maximum allowed nominal power.

Indeed, the first inner Savonius blade continues to rotate even after being decoupled from the second outer Darrieus blade but in a non-idle manner - as typically occurs in the background art, for example that shown by JP2007040239

A and ES 1078572 U - but instead actively, remaining connected to the electric generator means and thus continuing to produce electrical energy.

Similarly, the dynamic joining means (such as, preferably, the aforesaid progressive electromagnetic clutch) are used if the kinetic energy of the wind reaches values such that it is necessary to slow down the rotation of the Darrieus blade to maintain the number of revolutions of the electric generator, connected thereto, close to the nominal value: in this case, the system for actuating the blades of the invention intervenes so that the first slower blade takes on an aerodynamic brake function for the faster outer blade, providing that the inner blade returns to being integral in motion with the outer blade.

Therefore, equally advantageously the hybrid-type wind microturbine with axial development (or with vertical axis) of the present invention has a greater performance than that of the known type of hybrid wind microturbines.

Further features and peculiarities of the present invention will appear to a greater extent from the following description, related to a preferred embodiment of the wind microturbine (or wind generator) with axial development (or with vertical axis) claimed exclusively herein, given by way of indicative but non-limiting example, with the aid of the accompanying drawings, in which:

- figure 1 is an axonometric view of the hybrid-type wind microturbine with axial development (or with vertical axis) of the present invention;
- figure 2 is a longitudinal sectional view of the wind microturbine of figure 1;
- figure 2a is an enlargement of a first constructive assembly of figure 2;
- figure 3 is the axonometric view of a first constructive assembly of figure 1;
- figure 4 is the axonometric view of a detail of figure 3;
- figure 5 is the exploded view of figure 4;
- figure 6 is the axonometric view of a second constructive assembly of figure 1;
- figure 7 is a partial axonometric and split view of figure 6;
- figure 8 is an enlarged view of a third constructive assembly of figure 2;
- figure 9 is an enlarged view of a fourth constructive assembly of figure 2;
- figure 10 is a flow chart explaining the operation of the wind microturbine with axial development (or with vertical axis) of the invention;
- figure 11 is a Weibull statistical distribution function showing an example histogram of wind speed frequency;
- figure 12 is a Cartesian graph showing Weibull curves with different k (shape factor) values;
- figure 13 is a Cartesian graph showing Weibull curves with different average wind speed values;
- figure 14 is a Cartesian graph relating to the CP (Coefficient of Power) and TSR (Tip Speed Ratio) of a Savonius microturbine;
- figure 15 is a Cartesian graph relating to the CP (Coefficient of Power) and TSR (Tip Speed Ratio) of a Darrieus microturbine;
- figure 16 is a Cartesian graph relating to the CP (Coefficient of Power) and TSR (Tip Speed Ratio) of a hybrid microturbine;
- figure 17 is a Cartesian graph showing the power curves as a function of the rotational speed of the blades of microturbines of known type;
- figure 18 is a Cartesian graph showing the torque curves as a function of the rotational speed of the blades of microturbines of known type.

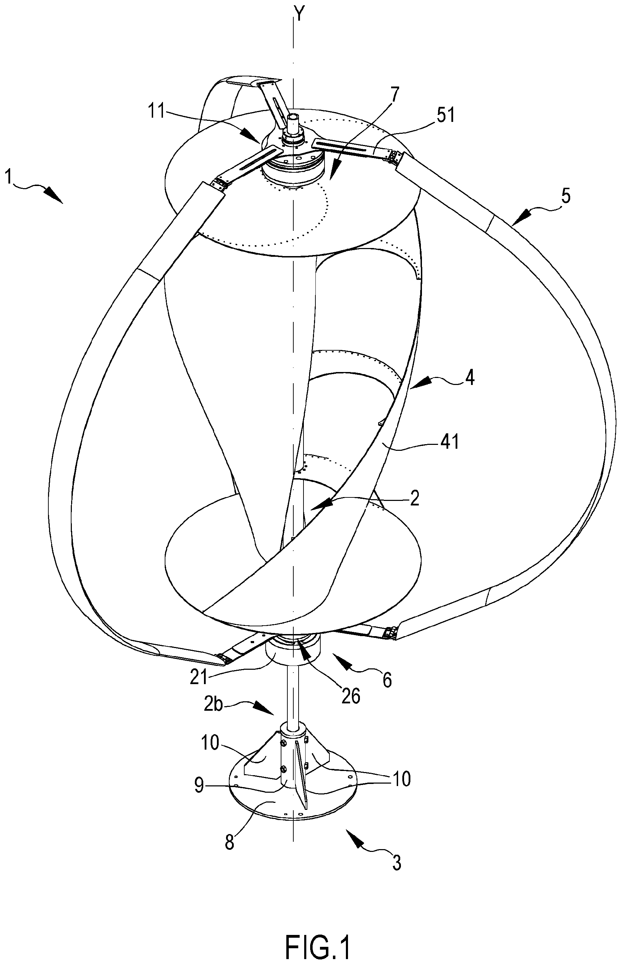

The wind microturbine with axial development, or with vertical axis, of the invention is shown in figure 1 where it is globally indicated by reference number 1.

As it can be seen, the wind microturbine 1 comprises:

- a central shaft 2 extending mainly along a vertical axis Y and provided with anchoring means, indicated as a whole with 3 and adapted to be coupled to a support structure T, such as a general pole or the roof of a house, of an industrial plant or a cabin;
- a first inner blade, in the assembly indicated with 4 and of the dynamic resistance and spontaneous start type, coupled to the central shaft 2 and adapted to be rotated about the vertical axis Y by the wind to which it is exposed and which impacts against it to capture the kinetic energy thereof and transform it into mechanical energy;
- a second outer blade, in the assembly indicated with 5 and of the dynamic load-bearing type, coupled to the central shaft 2 and arranged externally coaxial to the first inner blade 4, adapted to be rotated about the vertical axis Y by the wind to which it is exposed and which impacts against it to capture the kinetic energy thereof and transform it into mechanical energy;
- electric generator means, overall indicated with 6, applied to the central shaft 2 and operatively connected to each of the blades 4, 5, having the function of transforming the mechanical energy stored therein into electrical energy to be provided to users;
- dynamic joining means, overall indicated with 7, applied to the central shaft 2 and mutually coupling the first inner blade 4 and the second outer blade 5.

In accordance with the invention, the dynamic operating means 7 cooperate with actuation means, not shown for simplicity, so as to:

• make the rotation of the second outer blade 5 independent of the rotation of the first inner blade 4;
• simultaneously keep not only the second outer blade 5 but also the first inner blade 4 operatively connected to the electric generator means 6,

when the angular speed of the second outer blade 5, under the action of the wind, reaches a predetermined threshold value RpmD[threshold], set based on the dimensions of the blades 4, 5.

This is in clear and significant contrast with the background art, represented for example by the prior documents JP2007040239 A and ES 1078572 U, where the inner Savonius blade rotates substantially idle, without producing electrical energy when uncoupled from the outer Darrieus blade which, meanwhile, operates at full capacity producing the nominal electric power.

Preferably but not necessarily, in this case the actuation means comprise a central processing and control unit (or electronic controller) available to an operator, electrically connected to an electrical energy source and to the dynamic joining means 7 the operation of which is, therefore, appropriately managed automatically and continuously.

Accordingly, in the invention, movement of the first inner blade 4 and the second outer blade 5 is also managed in a continuous and constant manner, better referred to as "dynamic", a condition which is particularly suitable considering that the blades 4, 5 themselves come into contact with an atmospheric agent - wind - the intensity of which has an unstable temporal distribution but features a high variance in the unit of time, as already highlighted above.

Still preferably, the first inner blade 4 and the second outer blade 5 rotate about the vertical axis Y in the same direction, for example anticlockwise, while both are simultaneously transferring mechanical energy to the electric generator means 6 which in turn transform it into electrical energy; this aspect also contributes to maximizing the efficiency of the hybrid wind turbine 1 of the invention.

More in detail, the actuation means arrange the dynamic joining means 7 alternately in at least:

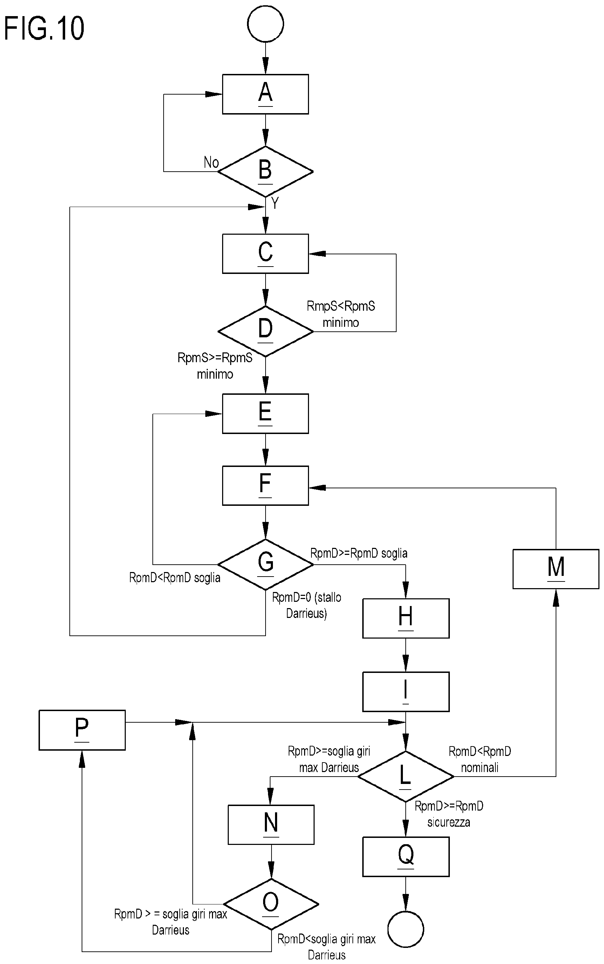

• a first position, defined when the angular speed of the first inner blade 4 has a value (identified as RpmS in the block diagram of figure 10) lower than a minimum preset value (identified as RpmS[minimum]) for a given prefixed time interval Δt in turn lower than said predetermined threshold value (identified as RpmD[threshold] in figure 10), in which the first inner blade 4 is dynamically and operatively decoupled from the second outer blade 5 and rotates about the vertical axis Y while the second outer blade 5 is steady and the dynamic joining means 7 are in the uncoupled, rest, passive or inoperative position;
• a second position, defined when the angular speed of the first inner blade 4 has a value not lower than such initial preset value RpmS and lower than the predetermined threshold value RpmD[threshold], in which the first inner blade 4 is dynamically and operatively coupled to the second outer blade 5 in such a way that the rotor 41 of the first inner blade 4 is coupled to the rotor 51 of the second outer blade 5, the blades 4, 5 both rotate around the vertical linear axis Y simultaneously and integrally with each other and the dynamic joining means 7 take the loading, working, active or operative position;
• a third position, defined when the angular speed of the second outer blade 5 is not lower than the predetermined threshold value RpmD[threshold], in which the first inner blade 4 is dynamically and operatively decoupled from the second outer blade 5 and both blades 4, 5 rotate about the vertical axis Y, however, independently of each other.

In particular, the dynamic joining means 7 are partially fixed and coupled to the central shaft 2 anchored to the support structure T, and partially rotationally movable since they are coupled to the first inner blade 4 and to the second outer blade 5.

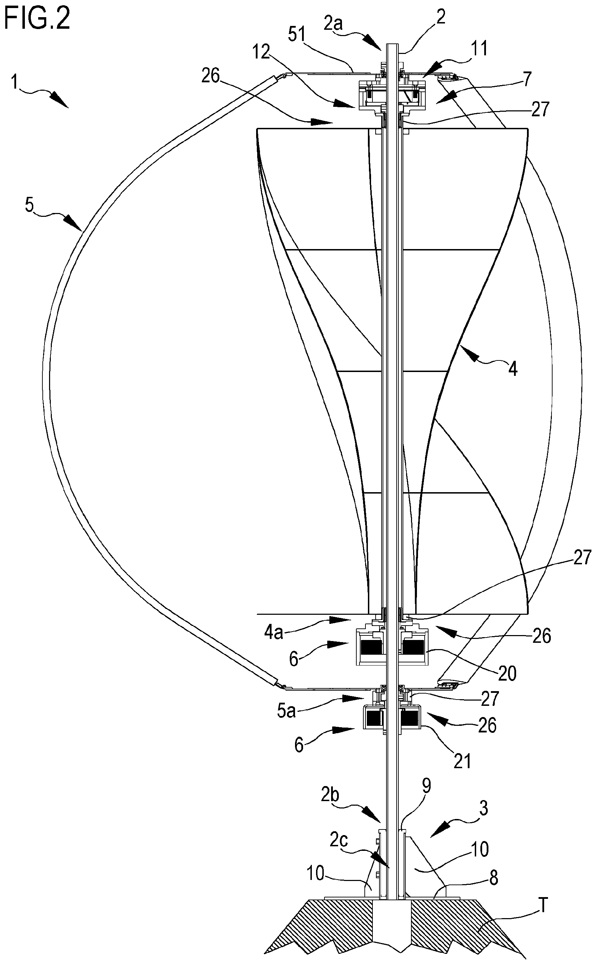

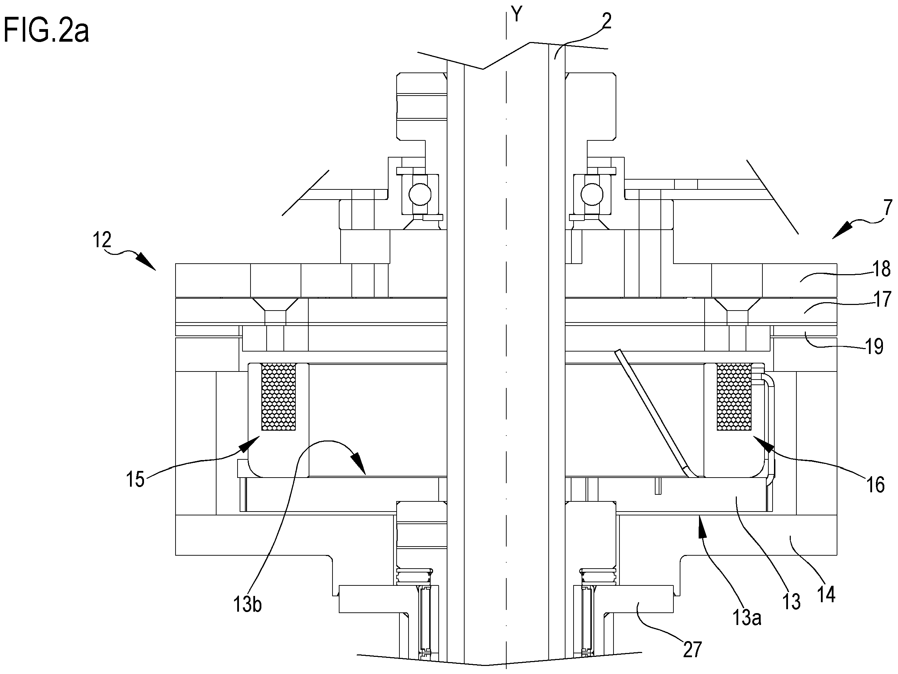

Furthermore, on a merely preferred but not constraining basis, the dynamic joining means 7 are arranged at an upper end 2a of the central shaft 2, opposite to a lower end 2b of the latter at which the anchoring means 3 are arranged. Preferably, as shown with greater precision in figure 2, the anchoring means 3 comprise a base plate 8 anchored to the support surface T, a vertical tubular column 9, stably protruding from the upper face 8a of the base plate 8 and in which an end portion 2c of the central shaft 2 is inserted, and a plurality of lateral reinforcement brackets 10 uniformly distributed about the tubular column 9 and fixed (for example by welding) to the side wall 9a of the tubular column 9 and to the upper face 8a of the base plate 8.

In an advantageous but not essential manner, the dynamic joining means 7 comprise in this case an active-type electromechanical mechanism 11.

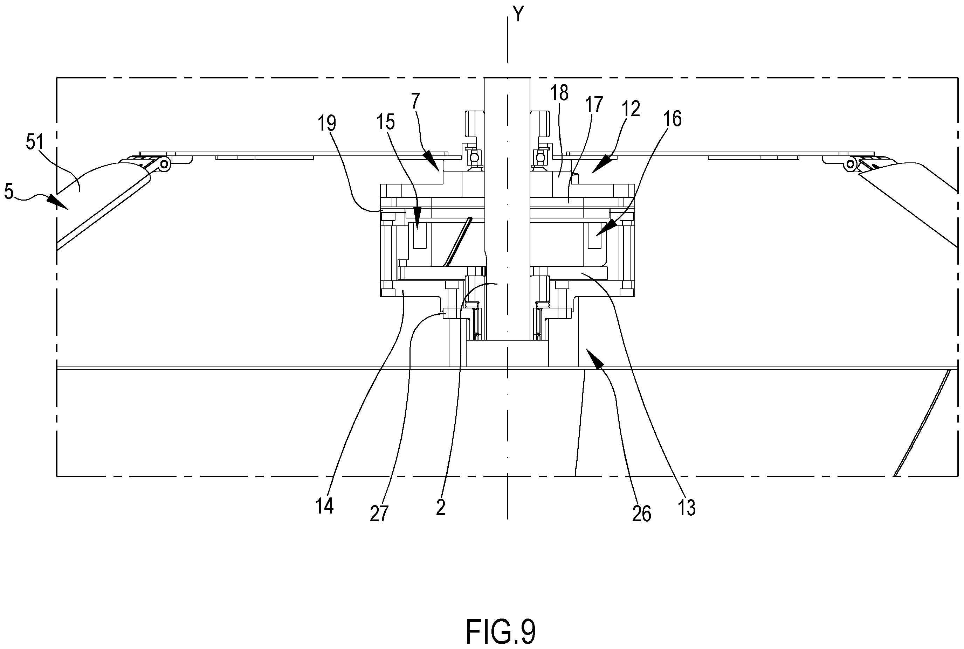

According to the preferred embodiment of the invention described herein, the active-type electromechanical mechanism 10 includes a progressive electromagnetic clutch 12, clearly seen in the enlargement in figure 2a and in figure 9, electrically connected to the actuation means for the power supply thereof and mounted externally coaxial to the central shaft 2.

The energy consumption required for the actuation of the progressive electromagnetic clutch 12 (coupling energy component) is limited only to the period of time required to start the second outer (Darrieus) blade 5.

The theoretical consumption of the progressive electromagnetic clutch 12 is in a range between 0 and 60W for a period of time determined by an electronic control system and managed by the previously defined central processing and control unit.

The choice of preferably using a progressive electromagnetic clutch is dictated by the objective of gradually transmitting the energy from the first inner blade 4 (referred to as Savonius) of the dynamic resistance type to the second outer blade 5 of the dynamic load-bearing type, overcoming the initial inertia of the latter, but without stalling the former.

More specifically, the progressive electromagnetic clutch 12 comprises:

- a first fixed bearing disk 13 coaxially and externally coupled to said central shaft 2;
- a base flange 14, integral with the first inner blade 4, externally coaxial to the central shaft 2 and arranged at the bottom close to a lower face 13a of the first fixed bearing disk 13;
- a pair of inner windings 15, 16 made of conductive material, facing an upper face 13b of the first bearing disk 13 and electrically powered;
- an anchoring disk 17, externally coaxial to the central shaft 2, made of at least partially magnetic material and facing above the inner windings 15, 16 with which it magnetically cooperates so that the anchoring disk 17 takes an operative position in which it is integral with the first bearing disk 13 when the inner windings 15, 16 are crossed by an electric current, and a non-operative position in which it is moved away and separated from the first bearing disk 13 when the inner windings 15, 16 are not crossed by an electric current and when the angular speed of the second outer blade 5 reaches and exceeds the predetermined threshold value RpmD[threshold];
- a second bearing disk 18, integral with the second outer blade 5, externally coaxial to the central shaft 2 and arranged superiorly close to the anchoring disk 17.

Preferably but not essentially, the progressive electromagnetic clutch 12 also comprises an annular ring 19 made of elastically yielding material (for example cork), interposed between the first fixed bearing disk 13 and the anchoring disk 17, having the function of cushioning the impact of the anchoring disk 17 against the first bearing disk 13 - or better, of cushioning the movement of the anchoring disk 17 towards the first bearing disk 13 - when the anchoring disk 17 switches from the non-operative position to the operative position when the inner windings are crossed by an electric current.

It's understood that in other embodiments of the wind microturbine with axial development (or with vertical axis) of the invention, not illustrated in the following, the progressive electromagnetic clutch could include a number of inner windings different from that one just described, since this number may vary starting from one based on the constructional choices.

With reference to the central shaft 2, it advantageously has a tubular structure and houses the electrical connection cables (not illustrated for simplicity) with which the electric generator means 6 are connected to the actuation means.

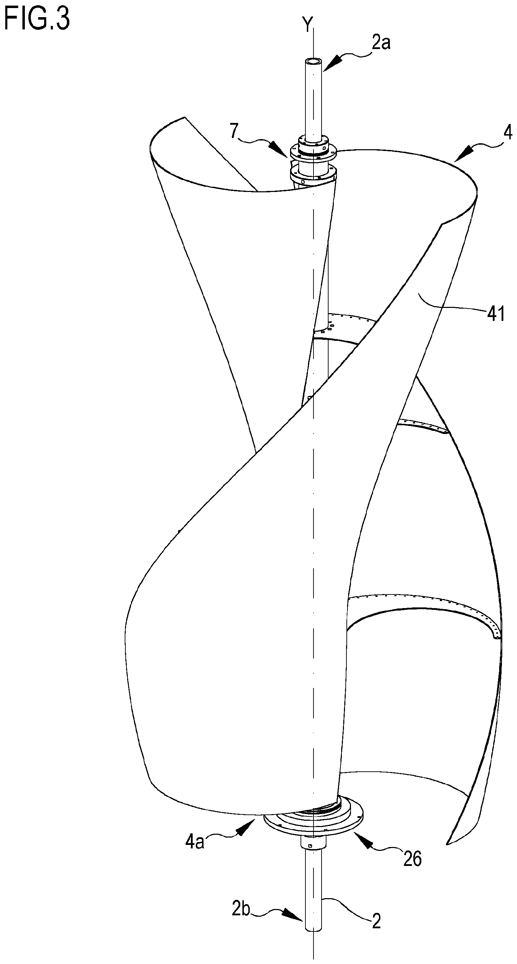

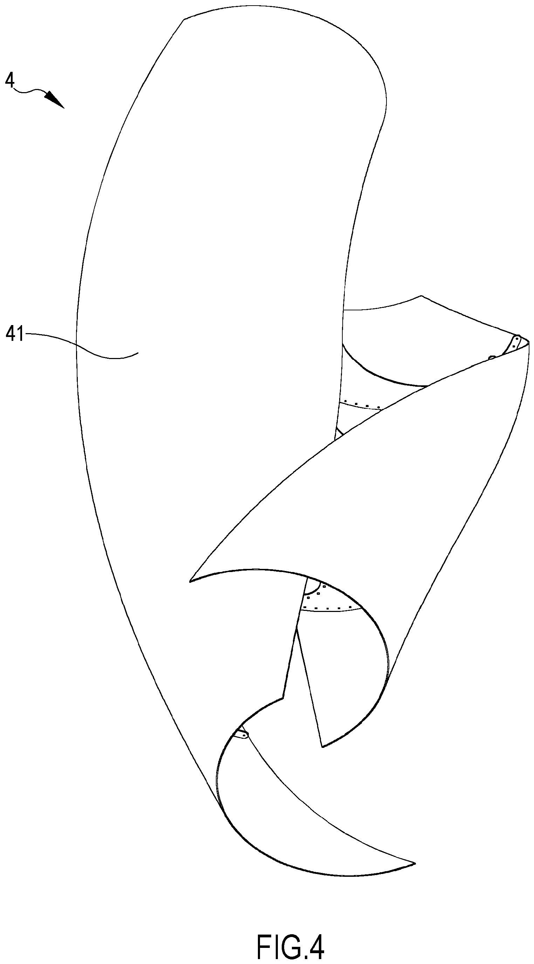

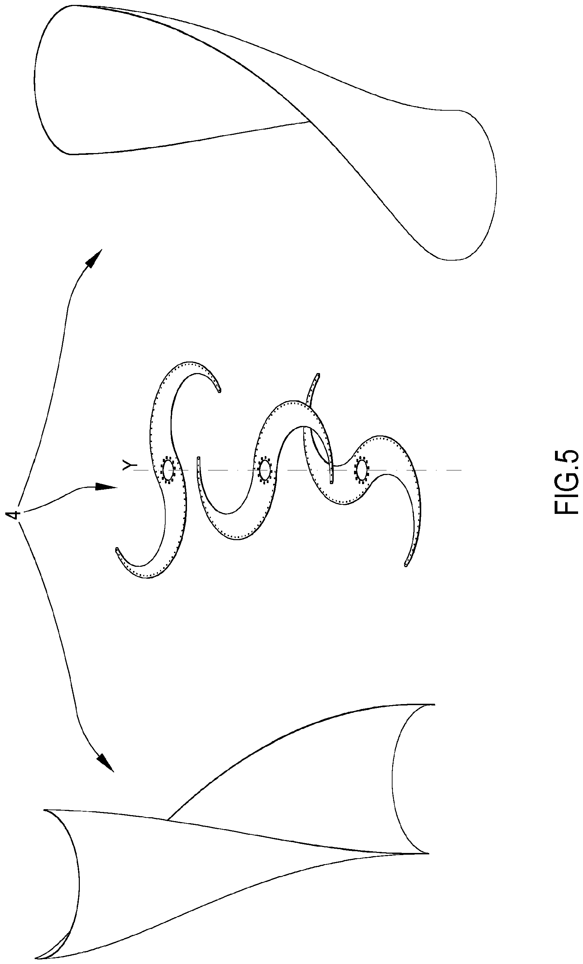

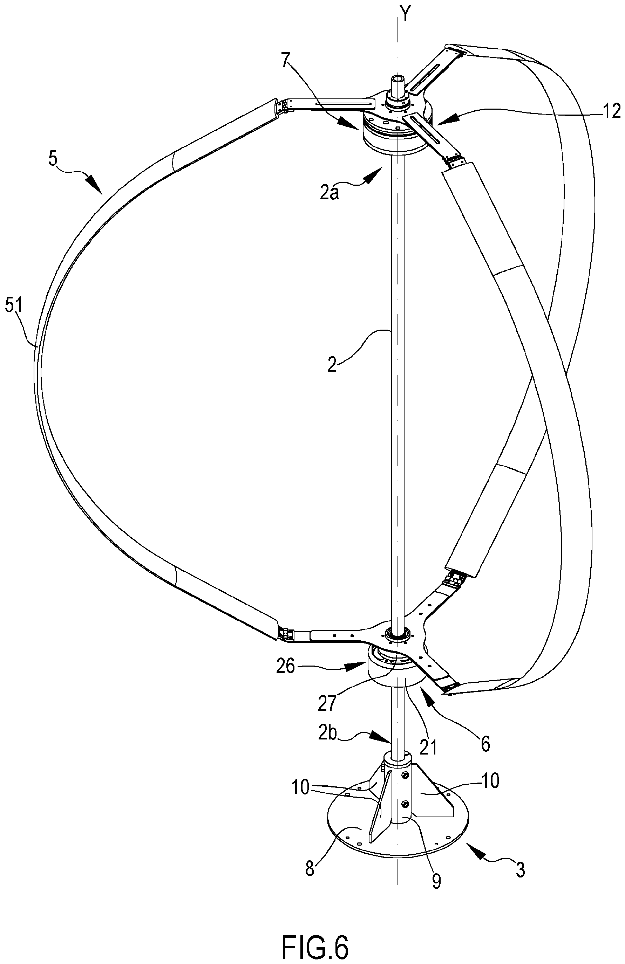

As regards the first inner blade 4, seen in detail in figures 3, 4 and 5 which also highlight the mechanical system with which it is fitted to the central shaft 2, it preferably has a helical profile, while the second blade 5 preferably has a wing profile, seen in figures 1, 2 and 6.

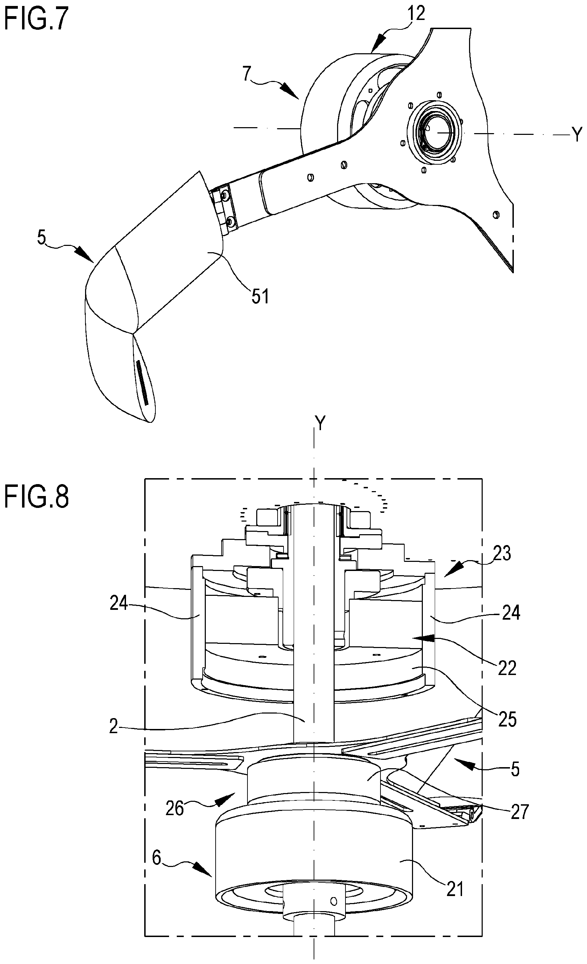

In addition, for safety requirements in the event of widely turbulent and invasive atmospheric events which may result in the detachment of the wind microturbine 1 of the invention from the support structure T, each of the blades 4, 5 has a convex or rounded profile (as obtained also from the detail in figure 7 for the second outer blade 5) and is made of any of the materials capable of satisfying the requirements of lightness, reliability, durability and safety chosen from the group consisting of aluminum, composite wood, molded plastic (for example polyethylene), glass fiber-reinforced plastic, combinations thereof and/or the like.

Furthermore, in some constructional variants the blades may also be hollow and internally provided with a core in plastic material such as a synthetic aramid fiber (also known by the commercial name of Kevlar) in order to reduce the risk of the dangerous shattering thereof in the event of breakage or detachment from the central shaft.

Preferably, advantageously but not necessarily, the electric generator means 6 comprise a first electric generator 20 arranged externally coaxial to the central shaft 2 and operatively connected to the first inner blade 4, and a second electric generator 21 arranged externally coaxial to the central shaft 2 and to the first electric generator 20 and operatively connected to the second outer blade 5: in brief, each blade 4, 5 of the wind microturbine 1 of the present invention is connected to a respective electric generator 20, 21.

Merely by way of example, the first electric generator 20 is arranged at an axial end 4a of the first inner blade 4 and the second generator 21 is substantially facing the first generator 20 arranged at an axial end 5a of the second outer blade 5 and close to a lower end 2b of the central shaft 2 at which the anchoring means 3 are arranged.

Preferentially, each of the aforesaid electric generators 20, 21 comprises a three-phase generator with permanent magnets (for example made of Neodymium (Nd), Iron (Fe) and Boron (B) alloy) in which the stator windings 22 are integral with the central shaft 2 and arranged inside an external rotor 23 provided with such permanent magnets 24, as can be seen from figure 8 and which is rotated since it is integral with the respective blade 4, 5: this in order to obtain a high power density and limited overall dimensions.

Each of the electric generators 20, 21 is also provided with a double diode bridge (not numbered in the accompanying drawings), which allows the operation of the electric generators 20, 21 to be preserved intact and efficiently in the event of a fault or short circuit.

Furthermore, as protection of the electric generators 20, 21, it is possible to optionally position, at the outlet of each single diode bridge, some arresters (also not numbered in the accompanying drawings) connected to ground and electric actuators (also not highlighted with a reference numeral).

Preferably, although not necessarily, the electric generator means 6 also comprise an angular position transducer 25, otherwise known also as encoder, electrically connected to the actuation means and adapted to measure the rotation speed of the blades 4, 5: in particular, the angular position transducer 25 is, in the specific case, arranged inside the rotor 23 of the three-phase permanent magnet generator.

The choice of providing the electric generators 20, 21 with an encoder 25 to measure the angular speed of the two systems of blades 4, 5 is fundamental for the following reasons:

- to check the various mechanical and electromechanical elements (for example, the blades 4, 5 in the starting and braking step thereof);
- to provide in real time an input value to the central processing and control unit (or electronic controller or processor) to manage the machine and, in turn, provide real data to the MPPT (Maximum Power Point Tracking) algorithms, in order to most effectively follow the maximum power curve (MPPT).

In alternative, more used and updated variants of the wind microturbine of the invention, not illustrated, the rotation speed of the two blade systems can be detected by a regenerative drive as described below, through the integrated reading of the return currents from the three-phase permanent magnet generator of each of the electric generators.

In the wind microturbine 1 of the invention, the presence of several electric generators forming part of different and distinct sub-turbines allows to extract the maximum electric power from all the turbine subsystems (Savonius blade 4 and Darrieus blade 5) installed, contrary to the background art (see JP2007040239 A and ES 1078572 U, for example) which typically shows a single electric generator. The coupling of the electric generators 20, 21 to the blades 4, 5 of the two subsystems (Savonius and Darrieus) will be carried out by the analysis of the SRO parameter (Specific Rated Output, measured in Kw/m$^2$) which determines the optimal size of the electric generator 20, 21 itself on the basis of the mechanical energy produced by the specific dimensions of the blades 4, 5 provided by the wind microturbine with axial development 1 of the invention.

SRO is intended as the parameter which can be calculated with the formula:

$$SRO = \frac{P_{max}}{A_d} = \frac{1}{2}\rho C_p V_R^3 \eta_m \eta_{el} = \frac{1}{2}\rho C_p V_{max}^3 \quad \left[\frac{kW}{m^2}\right]$$

where:

V = volume of air processed;
Cp = coefficient of power;

p = air density.

A low value of the SRO parameter corresponds to a low Cp, a low shear value and a minimum if not zero initial inertia, such as to justify the installation of a wind microturbine in sites where the wind speed is quite low, while a high SRO value indicates a high Cp, a high shear value and a high initial inertia, such as to justify the installation of a wind microturbine in sites where the wind speed is more relevant.

Advantageously but merely preferred, the wind microturbine with vertical axis 1 of the invention also comprises support and sliding means, indicated as a whole with 26, externally and coaxially coupled to the central shaft 2 at one or more of the rotationally moving members belonging to the blades 4, 5, to the electric generator means 6 and/or to the dynamic joining means 7 with which they cooperate during rotation about the vertical axis Y.

In the case being described, the support and sliding means 26 are coupled only to the dynamic joining means 7 and to the electric generator means 6, as can be seen in figures 1-3 and 8.

More in particular, the support and guide means 26 comprise, for example, an axial rotating bush 27, made of a material with a low friction coefficient such as for example technopolymer, interposed in this preferred but not limiting case, only between the dynamic joining means 7 and the first inner blade 4, between the electric generator means 6 and the first inner blade 4 and between the electric generator means 6 and the second outer blade 5.

It is understood that in alternative embodiments of the wind microturbine with axial development of the invention, not shown below, the axial rotating bush and, more generally, the support and sliding means, may also be interposed between the electric generator means and/or between the electric generator means and the dynamic joining means, or only between some of the aforesaid rotationally moving members of the wind microturbine itself.

The installation of the axial rotating bush 27 in the positions described improves the mechanical efficiency of the wind microturbine 1 in terms of friction, as well as the reliability thereof over time, also considering that sometimes the installation sites are in environmental and climatic conditions which can be reasonably defined as critical (presence of rain, salt, sand, smog, industrial fumes and so on).

The axial rotating bush 27, made of technopolymer, mounted in the claimed wind microturbine 1, has the following advantageous features:

- excellent resistance to abrasion, in particular to high dynamic loads;
- good friction coefficients;
- excellent resistance to dirt (dust);
- excellent durability even with oscillatory movements;
- operating temperature between -40°C and +135°C.

It should also be noted that the central processing and control unit is electrically connected to an inverter or, more precisely, a regenerative frequency converter (also known in electronic jargon as "drive") with automatic learning of the type per se by now known to those skilled in the art, arranged downstream of the electric generator means 6.

This regenerative frequency converter (or "drive") is capable of performing a direct and dynamic torque control of the electric generator means 6, since it is provided with a programmable CPU based on the operating requirements, generating a counter-torque on the electric generator means 6 (in particular on the first generator 20 and on the second generator 21), which varies as a function of the parameters read in input thereto, allowing to maintain the production of electrical energy at the maximum value and thus improving the overall efficiency of the hybrid wind microturbine 1 of the invention.

The central processing and control unit associated with the hybrid wind microturbine 1 of the present invention and, preferably, integrated in the regenerative drive, also allows automatic management of the following functions:

- activation of the progressive electromagnetic clutch 12 when the conditions are optimal;
- progressive activation of the electric generator 20 of the second outer Darrieus blade 5;
- activation of the braking systems to keep the speed of the second outer Darrieus blade 5 stable;
- data supply to the inverter (or frequency converter) to optimize the MPPT (Maximum Power Point Tracking) strategy.

In fact, the extraction of the maximum wind power, in the theoretical hours available, to be sent to the electricity grid is one of the most important objectives to be pursued in the design of the control and management of the operation of the wind microturbine of the invention.

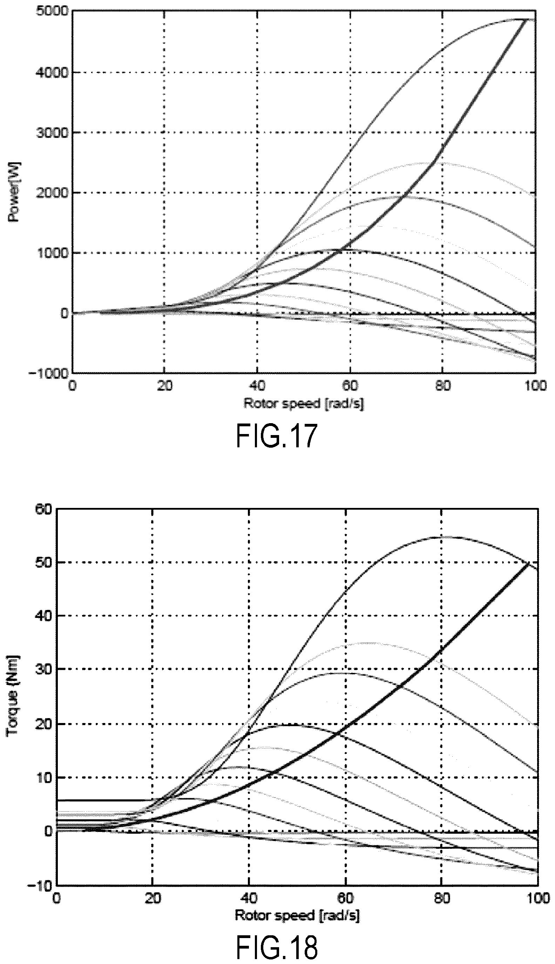

The microturbines on the market use algorithms which are optimal in stable wind conditions, since they are based, as already said, on static measurements of the power curves (or torque curves) as a function of the rotational speed of the blades (see figures 17 and 18 attached).

From literature it can be seen that the optimal place of operation of a wind microturbine is given by the red curves, called MPPT (Maximum Power Point Tracking) place.

For the system to work at the maximum capacity thereof, the wind speed and the construction data of the wind machine must be instantly known.

By means of the present invention wind microturbine it is possible to measure the instant wind speed and optimize the efficiency of the process of transforming mechanical energy into electrical energy, even as a function of the variation of the mechanical efficiency parameters which physiologically deteriorate over time. This is possible, as previously explained, due for example to the insertion of the encoder 25 in the electric generators 20, 21 close to the two blade systems 4, 5. Therefore, in the invention the first inner Savonius blade 4, connected to an electric generator 20 provided with an encoder 25, thus becomes a "potential anemometer" allowing to store the data and create a territory mapping of the wind speeds and their distribution over time: essentially, the wind microturbine 1 of the invention becomes a detection station.

Operatively, the operation of the wind microturbine 1 with axial development of the present invention is diagrammatically shown in the flow chart in figure 10.

As mentioned, the operating method of the wind microturbine 1 of the invention (or method for the production of electrical energy by means of the wind microturbine 1 with axial development) forms an integral part of the object of the invention.

Starting from a situation where the wind microturbine 1 is mounted on the support structure T and waiting for the wind (block A), when this rises (block B) and strikes against the wind microturbine 1 (down arrow with Y value), the first inner Savonius blade 4 begins rotating about the vertical axis Y, the first electric generator 20 operatively connected thereto begins storing electrical energy and the actuation means start monitoring the RpmS value of the rotation speed of the first inner blade 4 (block C); in this step, the second outer Darrieus blade 5 rests stationary.

If (block D) the control underway reveals that, for a given time interval $\Delta t$, the RpmS value of the angular speed of the first inner blade 4 is lower than a preset minimum value RpmS[minimum], only the first inner Savonius blade 4 continues to rotate and produce mechanical energy transformed into electrical energy by the first electric generator 20 operatively connected thereto (block C).

If, on the other hand, the RpmS value of the angular speed of the first inner blade 4 is higher than the minimum preset value RpmS[minimum], the dynamic joining means 7 (in particular, in this case, the electromagnetic clutch 12) are arranged by the actuation means gradually in the aforesaid second position (or load, work, active or operative position) so that the second outer Darrieus blade 5 also gradually begins to rotate simultaneously with the first inner blade 4 (block E), becoming integral thereto in motion.

Immediately thereafter (block F), the actuation means begin monitoring the RpmD value of the angular speed of the second outer blade 5: if (block G) from this monitoring it is seen that the RpmD value of the angular speed of the second outer blade 5 is lower than the predetermined threshold value RpmD[threshold], the wind microturbine 1 continues operating as in the previous state (block E of the block diagram in figure 10).

If, on the other hand, the RpmD value of the angular speed of the second outer blade 5 is higher than the predetermined threshold value RpmD[threshold], the actuation means detach or deactivate the dynamic joining means 7 (such as the progressive electromagnetic clutch 12), arranging them in the aforesaid third position, so that the second outer blade 5 continues rotating simultaneously with the first inner blade 4 but independently therefrom (block H in figure 10) and also the second electric generator 21, operatively connected to the second outer blade 5, begins to store electrical energy (block I).

If the RpmD value of the angular speed of the second outer blade 5 is equal to zero, the second outer blade 5 itself is stalled and the operation of the wind microturbine 1 of the invention returns to the previously mentioned block C.

The dynamic joining means 7, in particular the electromagnetic clutch 12, are also used if, during the control of the rotation of the second blade 5 (block L in figure 10), the kinetic energy of the wind reaches values such that it is necessary to brake the rotation of the second outer Darrieus blade 5 to keep the number of revolutions/minute of the second electric generator 21 close to the nominal value: in this case the system of the current invention takes on an aerodynamic brake function for the second outer blade 5 having a faster rotation speed.

Indeed, if the control of the RpmD value of the speed of the second outer blade 5 shows that it is abnormally lower than the threshold value RpmD[threshold] - which can also be defined as nominal value -, then the actuation means deactivate the second electric generator 21 (block M in Figure 10) and the process implemented by the wind microturbine 1 of the invention refers to what has already been described in relation to block F.

If, on the other hand, the control of the RpmD value of the rotation speed of the second outer blade 5 detects that this value is not lower (i.e., it is equal to or greater) than the maximum threshold value for the second outer Darrieus blade 5, the actuation means gradually drive the dynamic joining means 7 (specifically the electromechanical clutch 12) in the second position (or load, work, active or operative position) already described (block N in Figure 10), dynamically re-coupling the first inner blade 4 to the second outer blade 5 to slow down the rotation speed of the latter about the vertical axis Y.

If the next control (block O in figure 10) of the RpmD value of the speed of the second outer blade 5 indicates that this value has thus brought the second outer Darrieus blade 5 below the maximum threshold value, the actuation means again deactivate the progressive electromagnetic clutch 12 of the dynamic joining means 7 (block P of Figure 10), placing them in the third position, so as to return to the operating condition of the wind microturbine 1 of the invention described above with reference to block I.

Finally, if the RpmD value of the rotation speed of the second outer Darrieus blade 5 is not lower (or, in other words, is equal to or greater) than the RpmD[safety] safety value expected for the rotation of this type of blade, the mechanical locking (block Q in figure 10) of the wind microturbine 1 of the invention occurs by means of the actuation means.

To summarize, the Savonius component (that is, the first inner blade 4) of the wind microturbine 1 of the invention advantageously performs the following multiple functions:

a) determining the kinetic energy of the wind through an instantaneous reading of the speed thereof, carried out by means of the angular position transducer 25 (or encoder) or by means of the regenerative frequency converter (or drive);

b) starting the second outer Darrieus blade 5, overcoming the initial inertia thereof;

c) autonomously producing electrical energy from low wind speeds; in detail, part of the electrical energy produced by the first electric generator 20 is stored in a buffer battery (not shown) which serves to autonomously power the auxiliary systems of the wind microturbine 1 as a whole;

d) braking the second outer Darrieus blade 5 in the event of a particularly high wind intensity and resulting angular speed exceeding the nominal value of the second electric generator 21, in order to keep the number of revolutions of the second electric generator within the optimum speed 21 connected thereto.

In summary, therefore, the method of the invention comprises the following operations:

- capturing the kinetic energy of the wind and transforming it into mechanical energy exclusively through the rotation generated by the wind of the first inner blade 4 of the dynamic resistance type about the vertical axis Y defined by the central shaft 2 anchored to the support structure T;
- transforming the mechanical energy produced by the first inner blade 4 into electrical energy and storing it in the electric generator means 6;
- upon exceeding a preset minimum value (RpmS[minimum]) of the angular speed of the first inner blade 4, progressively starting the rotation about the vertical axis Y of the second outer blade 5 of the dynamic load-bearing type as well, coupled to the central shaft 2 and externally coaxial to the first blade 4;
- capturing the kinetic energy of the wind and transforming it into mechanical energy also by means of the rotation of the second outer blade 5;
- transforming, by the electric generator means 6, the mechanical energy produced by the second outer blade 5 into electrical energy, when the angular speed of the second blade 5, under the action of the wind, reaches and exceeds a predetermined threshold value (RpmD[threshold]), set according to the dimensions of the blades 4, 5 and greater than the minimum preset value (RpmS[minimum]) of the angular speed of the first inner blade 4.

According to the invention, when the angular speed of the second outer blade 5 reaches and exceeds the predetermined threshold value (RpmD[threshold]), the rotation of the second outer blade 5 is made independent from the rotation of the first inner blade 4 and both the second outer blade 5 and the first inner blade 4 remain operatively connected to the electric generator means 6 so that (unlike what is offered by the prior art) the simultaneous rotation of both the second outer blade 5 and the first inner blade 4 about the vertical axis Y results in the production of electrical energy.

In particular, the aforesaid operation of making the rotation of the second outer blade 5 independent from the rotation of the first inner blade 4 is automatically managed by a central processing and control unit available to an operator. Preferably, suitably but not bindingly, the starting of the second outer blade 5 occurs by transferring to the second outer blade 5 itself a part of the mechanical energy which was previously produced by the first inner blade 4 driven by the wind and which serves to overcome the initial inertia (as mentioned, rather significant) of the second outer blade 5.

Furthermore, again preferably but not exclusively, after exceeding the minimum preset value (RpmS[minimum]) of the angular speed of the first inner blade 4 and after rotationally starting the second outer blade 5, the first inner blade 4 and the second outer blade 5 are integral in rotary motion about the vertical axis Y: in other words, they suitably rotate according to an agreed rotation direction (for example counterclockwise) about the vertical axis Y.

It is understood that in further applications of the method of the invention, the first inner blade and the second outer blade will be able to rotate according to discordant rotation directions (one clockwise and the other counterclockwise, and vice versa) about the vertical axis, thereby reducing the disturbance created by the exhaust turbulence.

According to the preferred form of application of the method of the invention described herein, the operation of making the rotation of the second outer blade 5 independent from the rotation of the first inner blade 4 consists in deactivating the dynamic joining means 7 by which the blades 4, 5 are coupled to each other, arranging them in a position so that the dynamic joining means 7 dynamically and operatively release the first inner blade 4 from the second outer blade 5 and both such blades 4, 5 rotate about the vertical axis Y in an autonomous and independent manner with respect to each other, always remaining operatively connected to the electric generator means 6 to both produce electrical energy. Preferably but not necessarily, the method of the invention further comprises the operation of braking the rotation of the second outer blade 5 without interrupting the production of mechanical energy to be transferred to the electric generator means 6: this operation is performed if the value (RpmD) of the rotation speed of the second outer blade 5 is not less than the nominal threshold value provided by the electric generator means 6 and takes place by re-coupling or making dynamically integral with each other the second outer blade 5 and the first inner blade 4 which, rotating, thereby acts as an aerodynamic brake for the second outer blade 5.

The excess mechanical energy is discharged through the dynamic joining means 7 towards the rotor of the first inner blade 4 and transformed by the electric generator 20 connected thereto: otherwise the excess mechanical energy would be disadvantageously dispersed.

This sort of safety system, by recovering the surplus mechanical energy beyond the nominal power limit of the generator, prevents the electric generators 20, 21 from irreparably collapsing, sometimes creating harmful and dangerous fires.

Therefore, at the light of the description provided above it's understood how the hybrid-type wind microturbine with axial development (or with vertical axis) and the operating method of a wind microturbine with axial development, both object of the present invention, achieve the purposes and reach the advantages yet mentioned. In particular, in addition to what has already been highlighted, the wind microturbine of the invention advantageously comprises mechanical components made of materials with high mechanical strength and low specific weight.

The wind microturbine with axial development of the invention is capable of capturing an amount of kinetic energy provided by the wind in a given time span greater than that which is obtainable with the hybrid-type wind microturbines of the background art.

Furthermore, the wind microturbine of the present invention ensures low vibration levels and low noise levels, is easy to transport and install also in buildings in urban contexts, and can also be installed in several modules close together in the same site, to form a mini wind farm.

It should be emphasized that, despite the presence of active components (such as an electronic control board comprising the central processing and control unit defined above, as well as the progressive electromagnetic clutch), the overall energy balance of the wind microturbine of the invention remains in any case always positive.

This in a greatly improved manner with respect to the background art, shown for example in the prior documents JP2007040239 A and ES 1078572 U, where among other aspects, it must be considered that the second outer Darrieus blade always remains dynamically coupled to the central shaft and above all to the first inner Savonius blade, resulting in a negative and useless dispersion of electrical energy, which is instead avoided by the hybrid wind microturbine of the invention. The choice not to use passive components in the wind microturbine of the invention was dictated by two considerations:

- the presence of a central programmable processing and control unit, preferably integrated into the regenerative drive, allowing the reconfiguration of the constructional assembly at any time (even remotely), through firmware and algorithm updates following a possible loss of efficiency of the mechanical components which could make a possible static control program inadequate;
- passive components (axis with freewheel mechanisms, adding mechanisms) are subject to greater wear (normally equipped with springs on moving parts) and can significantly vary the calibration, after only a few months.

Furthermore, the central processing and programmable control unit provided by the wind microturbine of the invention is configured with mathematical formulas and customized logic cycles with the aim of monitoring in real time the actuators, the charge/discharge controller of the accumulators, the dynamic joining means (such as an electromagnetic clutch) and the turbine stopping system in situations of strong wind (safety brake).

In addition, the control and management system of the wind microturbine of the present invention is designed to simultaneously manage, within a single site, a microturbine farm arranged in series one after the other, so as to increase the power produced without increasing the dimensions of the wind microturbine of the invention, which for architectural and safety reasons should not generally exceed about 3 meters in height.

The possibility of configuring a micro wind farm optimizing the electronic component creates an interesting economy of scale on the selling prices of wind microturbines with axial development: indeed, the economic investment will be unique for the control component, scalable and modular for the mechanical and generative part based on the power demand of the end customer.

Upon execution, changes could be made to the wind microturbine with axial development (or with vertical axis) of the present invention, consisting, for example, of a different composition and distribution on the central shaft of the electric generator means and/or of the two inner and outer blades from those described above and seen in the accompanying drawings.

For instance, in an even more performing but economically more demanding and costly configuration, the electric generator means could include a pair of second electric generators operatively connected to the second outer (Darrieus) blade, arranged at respective and opposite axial ends of such a second blade; in this case, the dynamic joining means of the blades can be arranged below the first inner blade, facing one of the second electric generators of the second outer blade, while the first electric generator, operatively connected to the first inner blade, can be arranged above the first inner blade and facing the other one of the second electric generators.

In addition to this, there may be other embodiments of the wind microturbine with axial development exclusively claimed herein, not illustrated in the appended figures, in which the dynamic joining means may have a different constructional concept than the preferred one described above, with the aid of the following figures, which does not affect the advantage provided by the present invention.

Where the constructional features and techniques mentioned in any successive claims are followed by reference signs or numerals, such reference signs were introduced for the sole purpose of increasing intelligibility of the claims themselves, and therefore such reference signs have no limiting effect on the interpretation of each element identified by way of example only by such reference signs.

**Claims**

1. A wind microturbine (1) with axial development comprising:

    - a central shaft (2) extending mainly along a vertical axis (Y) and provided with anchoring means (3) adapted to be coupled to a support structure (T);
    - a first inner blade (4) of the dynamic resistance type, externally coupled to said central shaft (2) and adapted to be rotated about said vertical axis (Y) by the wind to which it is exposed and which impacts against it to capture the kinetic energy thereof and transform it into mechanical energy;
    - a second outer blade (5) of the dynamic load-bearing type, coupled to said central shaft (2) and arranged externally coaxial to said first blade (4), adapted to be rotated about said vertical axis (Y) by the wind to which it is exposed and which impacts against it to capture the kinetic energy thereof and transform it into mechanical energy;
    - electric generator means (6), applied to said central shaft (2) and operatively connected to each of said blades (4, 5), adapted to transform said mechanical energy into electrical energy to be provided to users;
    - dynamic joining means (7), applied to said central shaft (2) and coupling said first blade (4) and said second blade (5) together,

    **characterized in that** the dynamic joining means (7) cooperate with actuation means so as to:

    • make said rotation of said second outer blade (5) independent of said rotation of said first inner blade (4);
    • simultaneously keep both said second outer blade (5) and said first inner blade (4) operatively connected to said electric generator means (6) so that both blades (4, 5) produce electrical energy,

    when the angular speed of said second outer blade (5), under the action of the wind, reaches and exceeds a predetermined threshold value (RpmD [threshold]), set based on the dimensions of said blades (4, 5).

2. Microturbine (1) according to claim 1), **characterized in that** said actuation means comprise a central processing and control unit available to an operator, electrically connected to an electric power source and to said dynamic joining means (7).

3. Microturbine (1) according to claim 1) or 2), **characterized in that** said actuation means arrange said dynamic joining means (7) alternately in at least:

    • a first position, defined when said angular speed of said first inner blade (4) has a value lower than a minimum preset value (RpmS[minimum]) which is lower than said predetermined threshold value (RpmD[threshold]), in which said first inner blade (4) is dynamically and operatively decoupled from said second outer blade (5) and rotates about said vertical axis (Y) while said second outer blade (5) remains stationary;
    • a second position, defined when said angular speed of said first inner blade (4) has a value not lower than said minimum preset value (RpmS [minimum]) and which is lower than said predetermined threshold value (RpmD[threshold]), in which said first inner blade (4) is dynamically and operatively coupled to said second outer blade (5) such that a rotor (41) of said first inner blade (4) enters in pairs with a rotor (51) of said second outer blade (5) and said blades (4, 5) both rotate about said vertical axis (Y) simultaneously and integrally with each other;

• a third position, defined when the value of said angular speed of said second outer blade (5) is not lower than said predetermined threshold value (RpmD[threshold]), in which said first inner blade (4) is dynamically and operatively decoupled from said second outer blade (5) and both of said blades (4, 5) rotate about said vertical axis (Y) independently from each other.

4. Microturbine (1) according to any of the preceding claims, **characterized in that** said dynamic joining means (7) are partially fixed and coupled to said central shaft (2) and partially rotationally movable, since they are coupled to said first inner blade (4) and to said second outer blade (5).

5. Microturbine (1) according to any of the preceding claims, **characterized in that** said dynamic joining means (7) are arranged at an upper end (2a) of said central shaft (2), opposite to a lower end (2b) at which said anchoring means (3) are arranged.

6. Microturbine (1) according to any of the preceding claims, **characterized in that** said dynamic joining means (7) comprise an active-type electromechanical mechanism (11).

7. Microturbine (1) according to claim 6), **characterized in that** said active-type electromechanical mechanism (11) includes a progressive electromagnetic clutch (12) electrically connected to said actuation means for the supply thereof.

8. Microturbine (1) according to claim 7), **characterized in that** said progressive electromagnetic clutch (12) comprises:

   - a first fixed bearing disk (13) coaxially coupled to said central shaft (2);
   - a base flange (14), integral with said first inner blade (4), externally coaxial to said central shaft (2) and arranged at the bottom close to a lower face (13a) of said first bearing disk (13);
   - at least one inner winding (15, 16) made of at least partially magnetic material, facing an upper face (13b) of said first bearing disk (13) and electrically powered;
   - an anchoring disk (17), externally coaxial to said central shaft (2), made of conductive material facing above said inner winding (15, 16) with which it cooperates magnetically so that said anchoring disk (17) takes an operative position in which it is integral with said first bearing disk (13) when said inner winding (15, 16) is crossed by an electric current, and a non-operative position in which it is moved away and separated from said first bearing disk (13) when said inner winding (15, 16) is not crossed by an electric current and when said angular speed of said second outer blade (5) reaches and exceeds said predetermined threshold value (RpmD[threshold]);
   - a second bearing disk (18), integral with said second outer blade (5), coaxial to said central shaft (2) and arranged superiorly close to said anchoring disk (17).

9. Microturbine (1) according to claim 8), **characterized in that** said progressive electromagnetic clutch (12) comprises an annular ring (19) made of elastically yielding material, interposed between said first fixed bearing disk (13) and said anchoring disk (17), adapted to cushion the movement of said anchoring disk (17) towards said first bearing disk (13) when switching from said non-operative position to said operative position when said inner winding (15, 16) is crossed by an electric current.

10. Microturbine (1) according to any of the preceding claims, **characterized in that** said central shaft (2) has a tubular structure and houses the electrical connection cables through which said electric generator means (6) and said dynamic joining means (7) are connected to said actuation means.

11. Microturbine (1) according to any of the preceding claims, **characterized in that** said first inner blade (4) has a helical profile and said second outer blade (5) has a wing profile.

12. Microturbine (1) according to any of the preceding claims, **characterized in that** each of said blades (4, 5) has a convex profile and is made of any of the materials capable of satisfying requirements of lightness, reliability, durability and safety chosen from the group consisting of aluminum, composite wood, molded plastic, glass fiber-reinforced plastic, combinations thereof and/or the like.

13. Microturbine (1) according to any of the preceding claims, **characterized in that** said electric generator means (6) comprise at least a first electric generator (20), arranged externally coaxial to said central shaft (2) and operatively connected to said first inner blade (4), and at least a second electric generator (21) arranged externally coaxial to said central shaft (2) and to said first electric generator (20) and operatively connected to said second outer blade (5).

14. Microturbine (1) according to claim 13), **characterized in that** said first electric generator (20) is arranged at an axial end (4a) of said first inner blade (4) and said second generator (21) is arranged at an axial end (5a) of said second outer blade (5) and close to a lower end (2b) of said central shaft (2) at which said anchoring means (3) are arranged.

15. Microturbine (1) according to claim 13) or 14), **characterized in that** each of said electric generators (6) comprises a three-phase generator with permanent magnets, in which the stator windings (22) are integral with said central shaft (2) and arranged inside a rotor (23) provided with said permanent magnets (24).

16. Microturbine (1) according to any of the preceding claims, **characterized in that** said electric generator means (6) comprise an angular position transducer (25) electrically connected to said actuation means and adapted to measure said rotation speed of said blades (4, 5).

17. Microturbine (1) according to any of the preceding claims, **characterized in that** it includes support and sliding means (26) externally and coaxially coupled to said central shaft (2) at one or more of the rotationally moving members belonging to said blades (4, 5), to said electric generator means (6) and/or to said dynamic joining means (7) with which they cooperate during the rotation about said vertical axis (Y).

18. Microturbine (1) according to claim 17), **characterized in that** said support and guide means (26) comprise an axial rotating bush (27), made of a material with a low friction coefficient, interposed between said dynamic joining means (7) and said first inner blade (4), between said electric generator means, between said electric generator means (6) and said first inner blade (4), between said electric generator means (6) and said second outer blade (5), and/or between said electric generator means and said dynamic joining means.

19. Method of operating a wind microturbine (1) with axial development comprising the following operations:

- capturing the kinetic energy of the wind and transforming it into mechanical energy exclusively through the rotation generated by the wind of a first inner blade (4) of the dynamic resistance type about the vertical axis (Y) of a central shaft (2) anchored to a structure support (T);
- transforming said mechanical energy produced by said first inner blade (4) into electrical energy and storing it in electric generator means (6);
- upon exceeding a preset minimum value (RpmS[minimum]) of the angular speed of said first inner blade (4), progressively start the rotation about said vertical axis (Y) of a second outer blade (5) of the dynamic load-bearing type as well, coupled to said central shaft (2) and externally coaxial to said first blade (4);
- capturing the kinetic energy of the wind and transforming it into mechanical energy also by means of said rotation of said second outer blade (5);
- transforming, by said electric generator means (6), said mechanical energy produced by said second outer blade (5) into electrical energy when the angular speed of said second blade (5), under the action of the wind, reaches and exceeds a predetermined threshold value (RpmD[threshold]), set based on the dimensions of said blades (4, 5) and greater than said preset minimum

value (RpmS[minimum]) of said angular speed of said first blade (4), **characterized in that**, when said angular speed of said second outer blade (5) reaches and exceeds said predetermined threshold value (RpmD[threshold]), said rotation of said second outer blade (5) is made independent of said rotation of said first inner blade (4) and both said second outer blade (5) and said first inner blade (4) remain operatively connected to said electric generator means (6) so that said simultaneous rotation of both said second outer blade (5) and said first inner blade (4) about said vertical axis (Y) results in the production of electrical energy.

20. Method according to claim 19), **characterized in that** said operation of making said rotation of said second outer blade (5) independent of said rotation of said first inner blade (4) is managed automatically by a central processing and control unit.

21. Method according to claim 19) or 20), **characterized in that** said starting of said second outer blade (5) occurs through the transfer to said second outer blade (5) of a part of said mechanical energy which was previously produced by said first inner blade (4) driven by the wind and which serves to overcome the initial inertia of said second outer blade (5).

22. Method according to claim 19), 20) or 21), **characterized in that** after said exceeding of said preset minimum value (RpmS[minimum]) of said angular speed of said first inner blade (4) and after said operation of starting said second outer blade (5), said first inner blade (4) and said second outer blade (5) are integral in the rotary motion about said vertical axis (Y).

23. Method according to any of the claims 19) to 22), **characterized in that** said operation of making said rotation of said second outer blade (5) independent of said rotation of said first inner blade (4) consists in deactivating dynamic joining means (7) arranging them in a position such that said dynamic joining means (7) dynamically and operatively decouple said first inner blade (4) from said second outer blade (5) and both said blades (4, 5) rotate about said vertical axis (Y) independently of each other, remaining operatively connected to said electric generator means (6) to both produce electrical energy.

24. Method according to any of the claims 19) to 23), **characterized in that** it comprises the operation of braking said rotation of said second outer blade (5), performed if the value (RpmD) of said rotation speed of said second outer blade (5) is not less than the nominal threshold value expected by said electric generator means (6) and dynamically coupling said second outer blade (5) to said first inner blade (4) which, by rotating, thus acts as an aerodynamic brake for said second blade (5).

**Patentansprüche**

1. Windmikroturbine (1) mit axialer Entwicklung, die Folgendes umfasst:

   - eine zentrale Welle (2), die sich hauptsächlich entlang einer vertikalen Achse (Y) erstreckt und mit Verankerungsmitteln (3) versehen ist, die an eine Trägerstruktur (T) gekoppelt werden können;
   - eine erste innere Schaufel (4) mit dynamischem Widerstand, der außen an die zentrale Welle (2) gekoppelt ist und durch den Wind, dem er ausgesetzt ist und der auf ihn aufprallt um die vertikale Achse (Y) gedreht werden kann, um seine kinetische Energie einzufangen und sie in mechanische Energie umzuwandeln;
   - eine zweite äußere Schaufel (5) des dynamisch lasttragenden Typs, die an die zentrale Welle (2) gekoppelt und außen koaxial zu der ersten Schaufel (4) angeordnet ist, und die geeignet ist, durch den Wind, dem sie ausgesetzt ist und der auf sie aufprallt, um die vertikale Achse (Y) gedreht zu werden, um die kinetische Energie davon einzufangen und sie in mechanische Energie umzuwandeln;
   - elektrische Generatormittel (6), die an der zentralen Welle (2) angebracht und mit jedem der Flügel (4, 5) funktionell verbunden sind und die mechanische Energie in elektrische Energie umwandeln können, die den Benutzern zur Verfügung gestellt wird;
   - dynamische Verbindungsmittel (7), die an der zentralen Welle (2) angebracht sind und die erste Schaufel (4) und die zweite Schaufel (5) miteinander verbinden,

   **dadurch gekennzeichnet, dass** die dynamischen Verbindungsmittel (7) mit Betätigungsmitteln zusammenwirken, um:

   • die Drehung der zweiten äußeren Schaufel (5) unabhängig von der Drehung der ersten inneren Schaufel (4) zu machen;
   • gleichzeitig sowohl die zweite äußere Schaufel (5) als auch die erste innere Schaufel (4) betriebsmäßig mit den elektrischen Generatormitteln (6) verbunden zu halten, so dass beide Schaufeln (4, 5) elektrische Energie erzeugen,

   wenn die Winkelgeschwindigkeit der zweiten äußeren Schaufel (5) unter der Einwirkung des Windes einen vorbestimmten Schwellenwert (RpmD [threshold]) erreicht und überschreitet, der auf der Grundlage der Abmessungen der Schaufel (4, 5) festgelegt wird.

2. Mikroturbine (1) nach Anspruch 1, **dadurch gekennzeichnet, dass** die Betätigungsmittel eine zentrale Verarbeitungs- und Steuereinheit umfassen, die einem Bediener zur Verfügung steht und elektrisch mit einer elektrischen Energiequelle und den dynamischen Verbindungsmitteln (7) verbunden ist.).

3. Mikroturbine (1) nach Anspruch 1) oder 2), **dadurch gekennzeichnet, dass** die Betätigungsmittel die dynamischen Verbindungsmittel (7) abwechselnd in mindestens:

• eine erste Position, die definiert ist, wenn die Winkelgeschwindigkeit der ersten inneren Schaufel (4) einen Wert hat, der niedriger als ein minimaler voreingestellter Wert (RpmS[minimum]) ist, der niedriger als der vorbestimmte Schwellenwert (RpmD[threshold]) ist, in der die erste innere Schaufel (4) dynamisch und operativ von der zweiten äußeren Schaufel (5) entkoppelt ist und sich um die vertikale Achse (Y) dreht, während die zweite äußere Schaufel (5) stationär bleibt;
• eine zweite Position, die definiert ist, wenn die Winkelgeschwindigkeit der ersten inneren Schaufel (4) einen Wert hat, der nicht niedriger ist als der minimale voreingestellte Wert (RpmS [minimum]) und der niedriger ist als der vorbestimmte Schwellenwert (RpmD[threshold]), wobei die erste innere Schaufel (4) dynamisch und funktionsfähig mit der zweiten äußeren Schaufel (5) gekoppelt ist, so dass ein Rotor (41) der ersten inneren Schaufel (4) paarweise mit einem Rotor (51) der zweiten äußeren Schaufel (5) eintritt und die Schaufeln (4, 5) beide gleichzeitig und integral miteinander um die vertikale Achse (Y) rotieren;
• eine dritte Position, die definiert ist, wenn der Wert der Winkelgeschwindigkeit der zweiten äußeren Schaufel (5) nicht niedriger als der vorbestimmte Schwellenwert (RpmD[threshold]) ist, in der die erste innere Schaufel (4) dynamisch und operativ von der zweiten äußeren Schaufel (5) entkoppelt ist und beide Schaufeln (4, 5) sich unabhängig voneinander um die vertikale Achse (Y) drehen.

4. Mikroturbine (1) nach einem der vorhergehenden Ansprüche, **dadurch gekennzeichnet, dass** die dynamischen Verbindungsmittel (7) teilweise fest und mit der zentralen Welle (2) gekoppelt und teilweise drehbar beweglich sind, da sie mit der ersten inneren Schaufel (4) und der zweiten äußeren Schaufel (5) gekoppelt sind.

5. Mikroturbine (1) nach einem der vorhergehenden Ansprüche, **dadurch gekennzeichnet, dass** die dynamischen Verbindungsmittel (7) an einem oberen Ende (2a) der zentralen Welle (2) angeordnet sind, das einem unteren Ende (2b), an dem die Verankerungsmittel (3) angeordnet sind, gegenüberliegt.

6. Mikroturbine (1) nach einem der vorhergehenden Ansprüche, **dadurch gekennzeichnet, dass** die dynamischen Verbindungsmittel (7) einen elektromechanischen Mechanismus (11) vom aktiven Typ umfassen.

7. Mikroturbine (1) nach Anspruch 6), **dadurch gekennzeichnet, dass** der elektromechanische Mechanismus (11) vom aktiven Typ eine progressive elektromagnetische Kupplung (12) umfasst, die elektrisch mit den Betätigungsmitteln zu deren Versorgung verbunden ist.

8. Mikroturbine (1) nach Anspruch 7), **dadurch gekennzeichnet, dass** die progressive elektromagnetische Kupplung (12) Folgendes umfasst:

- eine erste feste Lagerscheibe (13), die koaxial mit der zentralen Welle (2) verbunden ist;
- einen Basisflansch (14), der mit der ersten inneren Schaufel (4) fest verbunden ist, außen koaxial zu der zentralen Welle (2) ist und an der Unterseite nahe einer unteren Fläche (13a) der ersten Lagerscheibe (13) angeordnet ist;
- mindestens eine innere Wicklung (15, 16) aus zumindest teilweise magnetischem Material, die einer oberen Fläche (13b) der ersten Lagerscheibe (13) gegenüberliegt und elektrisch gespeist wird;
- eine Verankerungsscheibe (17), die außen koaxial zu der zentralen Welle (2) ist und aus leitfähigem Material besteht und über der inneren Wicklung (15, 16) liegt, mit der sie magnetisch zusammenwirkt, so dass die Verankerungsscheibe (17) eine Betriebsposition einnimmt, in der sie fest mit der ersten Lagerscheibe (13) verbunden ist, wenn die innere Wicklung (15, 16) von einem elektrischen Strom durchflossen wird, und eine Ruhestellung einnimmt, in der sie von der ersten Lagerscheibe (13) entfernt und getrennt ist, wenn die innere Wicklung (15, 16) nicht von einem elektrischen Strom durchflossen wird und wenn die Winkelgeschwindigkeit der zweiten äußeren Schaufel (5) den vorbestimmten Schwellenwert (RpmD[threshold]) erreicht und überschreitet;
- eine zweite Lagerscheibe (18), die mit der zweiten äußeren Schaufel (5) einstückig ist, koaxial zu der zentralen Welle (2) ist und oben in der Nähe der Verankerungsscheibe (17) angeordnet ist.

9. Mikroturbine (1) nach Anspruch 8), **dadurch gekennzeichnet, dass** die progressive elektromagnetische Kupplung (12) einen Ring (19) aus elastisch nachgiebigem Material umfasst, der zwischen der ersten festen Lagerscheibe (13) und der Verankerungsscheibe (17) angeordnet ist und dazu geeignet ist, die Bewegung der Verankerungsscheibe (17) in Richtung der ersten Lagerscheibe (13) zu dämpfen, wenn von der Ruhestellung in die Betriebsstellung gewechselt wird, wenn die innere Wicklung (15, 16) von einem elektrischen Strom durchflossen wird.

10. Mikroturbine (1) nach einem der vorhergehenden Ansprüche, **dadurch gekennzeichnet, dass** die zentrale Welle (2) eine rohrförmige Struktur aufweist und die elektrischen Verbindungskabel aufnimmt, über die die elektrischen Generatormittel (6) und die dynamischen Verbindungsmittel (7) mit den Betätigungsmitteln verbunden sind.

11. Mikroturbine (1) nach einem der vorhergehenden Ansprüche, **dadurch gekennzeichnet, dass** die erste innere Schaufel (4) ein schraubenförmiges Profil und die zweite äußere Schaufel (5) ein Flügelprofil aufweist.

12. Mikroturbine (1) nach einem der vorhergehenden Ansprüche, **dadurch gekennzeichnet, dass** jede der Schaufeln (4, 5) ein konvexes Profil aufweist und aus einem beliebigen Material hergestellt ist, das die Anforderungen an Leichtigkeit, Zuverlässigkeit, Haltbarkeit und Sicherheit erfüllen kann und aus der Gruppe ausgewählt ist, die aus Aluminium, Holzverbundwerkstoff, geformtem Kunststoff, glasfaserverstärktem Kunststoff, Kombinationen davon und/oder dergleichen besteht.

13. Mikroturbine (1) nach einem der vorhergehenden Ansprüche, **dadurch gekennzeichnet, dass** die elektrischen Generatormittel (6) mindestens einen ersten elektrischen Generator (20) umfassen, der außen koaxial zu der zentralen Welle (2) angeordnet und betriebsmäßig mit der ersten inneren Schaufel (4) verbunden ist, und mindestens einen zweiten elektrischen Generator (21), der außen koaxial zu der zentralen Welle (2) und zu dem ersten elektrischen Generator (20) angeordnet und betriebsmäßig mit der zweiten äußeren Schaufel (5) verbunden ist.

14. Mikroturbine (1) nach Anspruch 13), **dadurch gekennzeichnet, dass** der erste elektrische Generator (20) an einem axialen Ende (4a) der ersten inneren Schaufel (4) und der zweite Generator (21) an einem axialen Ende (5a) der zweiten äußeren Schaufel (5) und in der Nähe eines unteren Endes (2b) der zentralen Welle (2), an der die Verankerungsmittel (3) angeordnet sind, angeordnet ist.

15. Mikroturbine (1) nach Anspruch 13) oder 14), **dadurch gekennzeichnet, dass** jeder der elektrischen Generatoren (6) einen Dreiphasengenerator mit Permanentmagneten umfasst, bei dem die Statorwicklungen (22) mit der zentralen Welle (2) fest verbunden und in einem mit den Permanentmagneten (24) versehenen Rotor (23) angeordnet sind.

16. Mikroturbine (1) nach einem der vorhergehenden Ansprüche, **dadurch gekennzeichnet, dass** die elektrischen Generatormittel (6) einen Winkelstellungswandler (25) umfassen, der elektrisch mit den Betätigungsmitteln verbunden ist und geeignet ist, die Drehgeschwindigkeit der Schaufeln (4, 5) zu messen.

17. Mikroturbine (1) nach einem der vorhergehenden Ansprüche, **dadurch gekennzeichnet, dass** sie Stütz- und Gleitmittel (26) umfasst, die außen und koaxial mit der zentralen Welle (2) an einem oder mehreren der drehbeweglichen Elemente gekoppelt sind, die zu den Schaufeln (4, 5), den elektrischen Generatormitteln (6) und/oder den dynamischen Verbindungsmitteln (7) gehören, mit denen sie während der Drehung um die vertikale Achse (Y) zusammenwirken.

18. Mikroturbine (1) nach Anspruch 17), **dadurch gekennzeichnet, dass** die Stütz- und Führungsmittel (26) eine axial rotierende Buchse (27) umfassen, die aus einem Material mit niedrigem Reibungskoeffizienten besteht und zwischen den dynamischen Verbindungsmitteln (7) und der ersten inneren Schaufel (4), zwischen den elektrischen Generatormitteln, zwischen den elektrischen Generatormitteln (6) und der ersten inneren Schaufel (4), zwischen den elektrischen Generatormitteln (6) und der zweiten äußeren Schaufel (5) und/oder zwischen den elektrischen Generatormitteln und den dynamischen Verbindungsmitteln angeordnet ist.

19. Verfahren zum Betrieb einer Windmikroturbine (1) mit axialer Entwicklung, das die folgenden Schritte umfasst:

- Einfangen der kinetischen Energie des Windes und Umwandlung in mechanische Energie ausschließlich durch die vom Wind erzeugte Drehung einer ersten inneren Schaufel (4) des Typs mit dynamischem Widerstand um die vertikale Achse (Y) einer an einem Strukturträger (T) verankerten zentralen Welle (2);
- Umwandlung der von der ersten inneren Schaufel (4) erzeugten mechanischen Energie in elektrische Energie und Speicherung dieser Energie in elektrischen Generatormitteln (6);
- bei Überschreiten eines voreingestellten Mindestwertes (RpmS[Minimum]) der Winkelgeschwindigkeit der ersten inneren Schaufel (4) schrittweise Einleitung der Drehung einer zweiten äußeren Schaufel (5) um die vertikale Achse (Y), die ebenfalls dynamisch lasttragend ist, an die zentrale Welle (2) gekoppelt und außen koaxial zur ersten Schaufel (4) ist;

- Einfangen der kinetischen Energie des Windes und Umwandlung dieser Energie in mechanische Energie auch durch die Drehung der zweiten äußeren Schaufel (5);

- Umwandlung der durch die zweite äußere Schaufel (5) erzeugten mechanischen Energie in elektrische Energie durch die elektrische Generatormittel (6), wenn die Winkelgeschwindigkeit der zweiten Schaufel (5) unter der Einwirkung des Windes einen vorbestimmten Schwellenwert (RpmD[threshold]) erreicht und überschreitet, der auf der Grundlage der Abmessungen der Schaufel (4, 5) festgelegt wird und größer als der voreingestellte Mindestwert (RpmS[minimum]) der Winkelgeschwindigkeit der ersten Schaufel (4) ist,

**dadurch gekennzeichnet, dass**, wenn die Winkelgeschwindigkeit der zweiten äußeren Schaufel (5) den vorbestimmten Schwellenwert (RpmD[Schwelle]) erreicht und überschreitet, die Drehung der zweiten äußeren Schaufel (5) unabhängig von der Drehung der ersten inneren Schaufel (4) gemacht wird und sowohl die zweite äußere Schaufel (5) als auch die erste innere Schaufel (4) betriebsmäßig mit den elektrischen Generatormitteln (6) verbunden bleiben, so dass die gleichzeitige Drehung sowohl der zweiten äußeren Schaufel (5) als auch der ersten inneren Schaufel (4) um die vertikale Achse (Y) zur Erzeugung elektrischer Energie führt.

20. Verfahren nach Anspruch 19), **dadurch gekennzeichnet, dass** der Vorgang, die Drehung der zweiten äußeren Schaufel (5) unabhängig von der Drehung der ersten inneren Schaufel (4) zu machen, automatisch von einer zentralen Verarbeitungs- und Steuereinheit gesteuert wird.

21. Verfahren nach Anspruch 19) oder 20), **dadurch gekennzeichnet, dass** das Anlaufen der zweiten äußeren Schaufel (5) durch die Übertragung eines Teils der mechanischen Energie auf die zweite äußere Schaufel (5) erfolgt, die zuvor von der ersten inneren Schaufel (4), der durch den Wind angetrieben wird, erzeugt wurde und die dazu dient, die anfängliche Trägheit der zweiten äußeren Schaufel (5) zu überwinden.

22. Verfahren nach Anspruch 19), 20) oder 21), **dadurch gekennzeichnet, dass** nach dem Überschreiten des voreingestellten Mindestwertes (RpmS[Minimum]) der Winkelgeschwindigkeit der ersten inneren Schaufel (4) und nach dem Starten der zweiten äußeren Schaufel (5) die erste innere Schaufel (4) und die zweite äußere Schaufel (5) in der Drehbewegung um die vertikale Achse (Y) integriert sind.

23. Verfahren nach einem der Ansprüche 19) bis 22), **dadurch gekennzeichnet, dass** der Vorgang, die Drehung der zweiten äußeren Schaufel (5) unabhängig von der Drehung der ersten inneren Schaufel (4) zu machen, darin besteht, dynamische Verbindungsmittel (7) zu deaktivieren, die in einer solchen Position angeordnet werden, dass die dynamischen Verbindungsmittel (7) die erste innere Schaufel (4) von der zweiten äußeren Schaufel (5) dynamisch und operativ entkoppeln und beide Schaufeln (4, 5) sich unabhängig voneinander um die vertikale Achse (Y) drehen, wobei sie funktionsfähig mit den elektrischen Generatormitteln (6) verbunden bleiben, um beide elektrische Energie zu erzeugen.

24. Verfahren nach einem der Ansprüche 19) bis 23), **dadurch gekennzeichnet, dass** es den Vorgang des Abbremsens der Drehung der zweiten äußeren Schaufel (5) umfasst, der durchgeführt wird, wenn der Wert (RpmD) der Drehgeschwindigkeit der zweiten äußeren Schaufel (5) nicht unter dem nominalen Schwellenwert liegt, der von den elektrischen Generatormitteln (6) erwartet wird, und das dynamische Koppeln der zweiten äußeren Schaufel (5) mit der ersten inneren Schaufel (4), die durch ihre Drehung somit als aerodynamische Bremse für die zweite Schaufel (5) wirkt.

**Revendications**

1. Microturbine éolienne (1) à développement axial comprenant :

- un arbre central (2) s'étendant principalement le long d'un axe vertical (Y) et pourvu de moyens d'ancrage (3) adaptés pour être couplés à une structure de support (T) ;
- une première pale intérieure (4) du type à résistance dynamique, couplée extérieurement audit arbre central (2) et adaptée pour être mise en rotation autour dudit axe vertical (Y) par le vent auquel elle est exposée et qui l'impacte pour capter l'énergie cinétique de celui-ci et la transformer en énergie mécanique ;
- une seconde pale extérieure (5) du type à charge dynamique, couplée audit arbre central (2) et disposée extérieurement coaxialement à ladite première pale (4), adaptée pour être mise en rotation autour dudit axe vertical (Y) par le vent auquel elle est exposée et qui l'impacte pour capter l'énergie cinétique de celui-ci et la transformer en énergie mécanique ;
- des moyens de générateur électrique (6), appliqués audit arbre central (2) et reliés de manière opérationnelle à chacune desdites pales (4, 5), adaptés pour transformer ladite énergie mécanique en énergie électrique à fournir aux utilisateurs ;
- des moyens de liaison dynamique (7), appliqués audit arbre central (2) et couplant ladite première pale (4) et ladite seconde pale (5) ensemble,

**caractérisé en ce que** les moyens de liaison dynamique (7) coopèrent avec des moyens d'actionnement de manière à :

• rendre ladite rotation de ladite seconde pale extérieure (5) indépendante de ladite rotation de ladite première pale intérieure (4) ;
• maintenir simultanément à la fois ladite seconde pale extérieure (5) et ladite première pale intérieure (4) reliées de manière opérationnelle auxdits moyens de générateur électrique (6) de sorte que les deux pales (4, 5) produisent de l'énergie électrique,

lorsque la vitesse angulaire de ladite seconde pale extérieure (5), sous l'action du vent, atteint et dépasse une valeur seuil prédéterminée (RpmD [seuil]), fixée sur la base des dimensions desdites pales (4, 5).

2. Microturbine (1) selon la revendication 1), **caractérisée en ce que** lesdits moyens d'actionnement comprennent une unité centrale de traitement et de commande disponible pour un opérateur, reliée électriquement à une source d'énergie électrique et auxdits moyens de liaison dynamique (7).

3. Microturbine (1) selon la revendication 1) ou 2), **caractérisée en ce que** lesdits moyens d'actionnement disposent lesdits moyens d'assemblage dynamique (7) alternativement dans au moins :

• une première position, définie lorsque ladite vitesse angulaire de ladite première pale intérieure (4) a une valeur inférieure à une valeur minimale prédéfinie (RpmS[minimum]) qui est inférieure à ladite valeur de seuil prédéterminée (RpmD[seuil]), où ladite première pale intérieure (4) est découplée de manière dynamique et opérationnelle de ladite seconde pale extérieure (5) et tourne autour dudit axe vertical (Y) tandis que ladite seconde pale extérieure (5) reste stationnaire ;
• une deuxième position, définie lorsque ladite vitesse angulaire de ladite première pale intérieure (4) a une valeur qui n'est pas inférieure à ladite valeur minimale prédéfinie (RpmS [minimum]) et qui est inférieure à ladite valeur de seuil prédéterminée (RpmD [seuil]), où ladite première pale intérieure (4) est couplée de manière dynamique et opérationnelle à ladite seconde pale extérieure (5) de sorte qu'un rotor (41) de ladite première pale intérieure (4) entre en paires avec un rotor (51) de ladite seconde pale extérieure (5) et lesdites pales (4, 5) tournent toutes deux autour dudit axe vertical (Y) simultanément et intégralement l'une avec l'autre ;
• une troisième position, définie lorsque la valeur de ladite vitesse angulaire de ladite seconde pale extérieure (5) n'est pas inférieure à ladite valeur de seuil prédéterminée (RpmD[seuil]), où ladite première pale intérieure (4) est découplée de manière dynamique et opérationnelle de ladite seconde pale extérieure (5) et les deux dites pales (4, 5) tournent autour dudit axe vertical (Y) indépendamment l'une de l'autre.

4. Microturbine (1) selon l'une quelconque des revendications précédentes, **caractérisée en ce que** lesdits moyens de liaison dynamique (7) sont partiellement fixes et couplés audit arbre central (2) et partiellement mobiles en rotation, puisqu'ils sont couplés à ladite première pale intérieure (4) et à ladite seconde pale extérieure (5).

5. Microturbine (1) selon l'une quelconque des revendications précédentes, **caractérisée en ce que** lesdits moyens de liaison dynamique (7) sont disposés à une extrémité supérieure (2a) dudit arbre central (2), à l'opposé d'une extrémité inférieure (2b) à laquelle sont disposés lesdits moyens d'ancrage (3).

6. Microturbine (1) selon l'une quelconque des revendications précédentes, **caractérisée en ce que** lesdits moyens de liaison dynamique (7) comprennent un mécanisme électromécanique de type actif (11).

7. Microturbine (1) selon la revendication 6), **caractérisée en ce que** ledit mécanisme électromécanique de type actif (11) comprend un embrayage électromagnétique progressif (12) relié électriquement auxdits moyens d'actionnement pour leur alimentation.

**8.** Microturbine (1) selon la revendication 7), **caractérisée en ce que** ledit embrayage électromagnétique progressif (12) comprend :

- un premier disque de palier fixe (13) couplé coaxialement audit arbre central (2) ;
- une bride de base (14), solidaire de ladite première pale intérieure (4), extérieurement coaxiale audit arbre central (2) et disposée au niveau de la partie inférieure à proximité d'une face inférieure (13a) dudit premier disque de palier (13) ;
- au moins un enroulement intérieur (15, 16) en matériau au moins partiellement magnétique, faisant face à une face supérieure (13b) dudit premier disque de palier (13) et alimenté électriquement ;
- un disque d'ancrage (17), extérieurement coaxial audit arbre central (2), réalisé en matériau conducteur, tourné vers le haut dudit enroulement intérieur (15, 16) avec lequel il coopère magnétiquement de sorte que ledit disque d'ancrage (17) prend une position opérationnelle où il est solidaire dudit premier disque de palier (13) lorsque ledit enroulement intérieur (15, 16) est traversé par un courant électrique, et une position non opérationnelle où il est éloigné et séparé dudit premier disque de palier (13) lorsque ledit enroulement interne (15, 16) n'est pas traversé par un courant électrique et lorsque ladite vitesse angulaire de ladite seconde pale extérieure (5) atteint et dépasse ladite valeur de seuil prédéterminée (RpmD[seuil]) ;
- un second disque de palier (18), solidaire de ladite seconde pale extérieure (5), coaxial audit arbre central (2) et disposé supérieurement à proximité dudit disque d'ancrage (17).

**9.** Microturbine (1) selon la revendication 8), **caractérisée en ce que** ledit embrayage électromagnétique progressif (12) comprend une bague annulaire (19) réalisée en un matériau élastiquement déformable, interposée entre ledit premier disque de palier fixe (13) et ledit disque d'ancrage (17), adaptée pour amortir le mouvement dudit disque d'ancrage (17) vers ledit premier disque de palier (13) lors du passage de ladite position non opérationnelle à ladite position opérationnelle lorsque ledit enroulement interne (15, 16) est traversé par un courant électrique.

**10.** Microturbine (1) selon l'une quelconque des revendications précédentes, **caractérisée en ce que** ledit arbre central (2) a une structure tubulaire et loge les câbles de connexion électrique par lesquels lesdits moyens de générateur électrique (6) et lesdits moyens de liaison dynamique (7) sont reliés auxdits moyens d'actionnement.

**11.** Microturbine (1) selon l'une quelconque des revendications précédentes, **caractérisée en ce que** ladite première pale intérieure (4) a un profil hélicoïdal et ladite seconde pale extérieure (5) a un profil en aile.

**12.** Microturbine (1) selon l'une quelconque des revendications précédentes, **caractérisée en ce que** chacune desdites pales (4, 5) présente un profil convexe et est réalisée dans l'un quelconque des matériaux capables de satisfaire aux exigences de légèreté, de fiabilité, de durabilité et de sécurité choisis dans le groupe constitué par l'aluminium, le bois composite, le plastique moulé, le plastique renforcé par des fibres de verre, leurs combinaisons et/ou similaires.

**13.** Microturbine (1) selon l'une quelconque des revendications précédentes, **caractérisée en ce que** lesdits moyens de générateur électrique (6) comprennent au moins un premier générateur électrique (20), disposé extérieurement coaxial audit arbre central (2) et relié de manière opérationnelle à ladite première pale intérieure (4), et au moins un second générateur électrique (21) disposé extérieurement coaxial audit arbre central (2) et audit premier générateur électrique (20) et relié de manière opérationnelle à ladite seconde pale extérieure (5).

**14.** Microturbine (1) selon la revendication 13), **caractérisée en ce que** ledit premier générateur électrique (20) est disposé à une extrémité axiale (4a) de ladite première pale intérieure (4) et ledit second générateur (21) est disposé à une extrémité axiale (5a) de ladite seconde pale extérieure (5) et à proximité d'une extrémité inférieure (2b) dudit arbre central (2) au niveau duquel lesdits moyens d'ancrage (3) sont disposés.

**15.** Microturbine (1) selon la revendication 13) ou 14), **caractérisée en ce que** chacun desdits générateurs électriques (6) comprend un générateur triphasé à aimants permanents, où les enroulements du stator (22) sont solidaires dudit arbre central (2) et disposés à l'intérieur d'un rotor (23) muni desdits aimants permanents (24).

**16.** Microturbine (1) selon l'une quelconque des revendications précédentes, **caractérisée en ce que** lesdits moyens de générateur électrique (6) comprennent un transducteur de position angulaire (25) relié électriquement auxdits moyens d'actionnement et adapté pour mesurer ladite vitesse de rotation desdites pales (4, 5).

**17.** Microturbine (1) selon l'une quelconque des revendications précédentes, **caractérisée en ce qu'**elle comprend des moyens de support et coulissants (26) couplés extérieurement et coaxialement audit arbre central (2) à un ou plusieurs des éléments mobiles en rotation appartenant auxdites pales (4, 5), auxdits moyens de générateur électrique (6) et/ou auxdits moyens de liaison dynamique (7) avec lesquels ils coopèrent pendant la rotation autour dudit axe vertical (Y).

18. Microturbine (1) selon la revendication 17), **caractérisée en ce que** lesdits moyens de support et de guidage (26) comprennent une douille rotative axiale (27), réalisée en un matériau à faible coefficient de frottement, interposée entre lesdits moyens de liaison dynamique (7) et ladite première pale intérieure (4), entre lesdits moyens de générateur électrique, entre lesdits moyens de générateur électrique (6) et ladite première pale intérieure (4), entre lesdits moyens de générateur électrique (6) et ladite seconde pale extérieure (5), et/ou entre lesdits moyens de générateur électrique et lesdits moyens de liaison dynamique.

19. Procédé de fonctionnement d'une microturbine éolienne (1) à développement axial comprenant les opérations suivantes :

- capter l'énergie cinétique du vent et la transformer en énergie mécanique exclusivement par la rotation générée par le vent d'une première pale intérieure (4) du type à résistance dynamique autour de l'axe vertical (Y) d'un arbre central (2) ancré à un support de structure (T) ;
- transformer ladite énergie mécanique produite par ladite première pale intérieure (4) en énergie électrique et la stocker dans des moyens de générateur électrique (6) ;
- lors du dépassement d'une valeur minimale prédéfinie (RpmS[minimum]) de la vitesse angulaire de ladite première pale intérieure (4), démarrer progressivement la rotation autour dudit axe vertical (Y) d'une seconde pale extérieure (5) du type à support de charge dynamique également, couplée audit arbre central (2) et extérieurement coaxiale à ladite première pale (4) ;
- capter l'énergie cinétique du vent et la transformer en énergie mécanique également au moyen de ladite rotation de ladite seconde pale extérieure (5) ;
- transformer, par lesdits moyens de générateur électrique (6), ladite énergie mécanique produite par ladite seconde pale extérieure (5) en énergie électrique lorsque la vitesse angulaire de ladite seconde pale (5), sous l'action du vent, atteint et dépasse une valeur de seuil prédéterminée (RpmD[seuil]), fixée sur la base des dimensions desdites pales (4, 5) et supérieure à ladite valeur minimale prédéfinie (RpmS[minimum]) de ladite vitesse angulaire de ladite première pale (4),

**caractérisé en ce que**, lorsque ladite vitesse angulaire de ladite seconde pale extérieure (5) atteint et dépasse ladite valeur de seuil prédéterminée (RpmD[seuil]), ladite rotation de ladite seconde pale extérieure (5) est rendue indépendante de ladite rotation de ladite première pale intérieure (4) et à la fois ladite seconde pale extérieure (5) et ladite première pale intérieure (4) restent reliées de manière opérationnelle auxdits moyens de générateur électrique (6) de sorte que ladite rotation simultanée à la fois de ladite seconde pale extérieure (5) et de ladite première pale intérieure (4) autour dudit axe vertical (Y) entraîne la production d'énergie électrique.

20. Procédé selon la revendication 19), **caractérisé en ce que** ladite opération consistant à rendre ladite rotation de ladite seconde pale extérieure (5) indépendante de ladite rotation de ladite première pale intérieure (4) est gérée automatiquement par une unité centrale de traitement et de commande.

21. Procédé selon la revendication 19) ou 20), **caractérisé en ce que** ledit démarrage de ladite seconde pale extérieure (5) se produit par le transfert à ladite seconde pale extérieure (5) d'une partie de ladite énergie mécanique qui a été précédemment produite par ladite première pale intérieure (4) entraînée par le vent et qui sert à surmonter l'inertie initiale de ladite seconde pale extérieure (5).

22. Procédé selon la revendication 19), 20) ou 21), **caractérisé en ce qu'**après ledit dépassement de ladite valeur minimale prédéfinie (RpmS[minimum]) de ladite vitesse angulaire de ladite première pale intérieure (4) et après ladite opération de démarrage de ladite seconde pale extérieure (5), ladite première pale intérieure (4) et ladite seconde pale extérieure (5) sont solidaires dans le mouvement de rotation autour dudit axe vertical (Y).

23. Procédé selon l'une quelconque des revendications 19) à 22), **caractérisé en ce que** ladite opération consistant à rendre ladite rotation de ladite seconde pale extérieure (5) indépendante de ladite rotation de ladite première pale intérieure (4) consiste à désactiver des moyens de liaison dynamique (7) en les disposant dans une position telle que lesdits moyens de liaison dynamique (7) découplent de manière dynamique et opérationnelle ladite première pale intérieure (4) de ladite seconde pale extérieure (5) et que lesdites deux pales (4, 5) tournent autour dudit axe vertical (Y) indépendamment l'une de l'autre, en restant reliées de manière opérationnelle auxdits moyens de générateur électrique (6) pour produire toutes deux de l'énergie électrique.

24. Procédé selon l'une quelconque des revendications 19) à 23), **caractérisé en ce qu'**il comprend l'opération de freinage de ladite rotation de ladite seconde pale extérieure (5), effectuée si la valeur (RpmD) de ladite vitesse de rotation de ladite seconde pale extérieure (5) n'est pas inférieure à la valeur nominale de seuil attendue par lesdits moyens de générateur électrique (6) et de couplage dynamique de ladite seconde pale extérieure (5) à ladite première pale intérieure (4) qui, en tournant, agit ainsi comme un frein aérodynamique pour ladite seconde pale (5).

**FIG.1**

# FIG.2

FIG.2a

FIG.3

4

41

FIG.4

FIG.5

FIG.6

FIG.7

FIG.8

FIG.9

FIG.10

A

No B
Y

C

RmpS<RpmS
minimo

D

RpmS>=RpmS
minimo

E

F

M

RpmD>=RpmD soglia
G
RpmD<RpmD soglia
RpmD=0 (stallo
Darrieus)

H

I

P

RpmD>=soglia giri
max Darrieus
L
RpmD<RpmD
nominali

N
RpmD>=RpmD
sicurezza

O
Q
RpmD > = soglia giri max
Darrieus
RpmD<soglia giri max
Darrieus

**Example histogram of wind speed frequency**

Wind speed [m/s]

FIG.11

**- Weibull curves with different k values**

$V_m = 8 \text{ m/s}$

Wind speed [m/s]

FIG.12

- *Weibull curves with different average wind speed values*

FIG.13

FIG.14

FIG.15

FIG.16

FIG.17

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007040239 A
- ES 1078572 U